# EUROPEAN PATENT SPECIFICATION

(11) **EP 0 800 942 B1**
(45) Date of publication and mention of the grant of the patent: **27.03.2002**
(21) Application number: 96935522.1
(22) Date of filing: 31.10.1996
(51) Int. Cl.: B60H 1/08, F24J 3/00

(54) **VARIABLE CAPACITY VISCOUS HEATER**
DICKSTOFFHEIZER MIT VERÄNDERLICHEM FÖRDERVOLUMEN
RECHAUFFEUR A LIQUIDE VISQUEUX A CAPACITE VARIABLE

(30) Priority: 01.11.1995 JP 28526695; 08.07.1996 JP 17815396; 29.08.1996 JP 22905896
(43) Date of publication of application: 15.10.1997
(73) Proprietor: Kabushiki Kaisha Toyota Jidoshokki, Kariya-shi, Aichi-ken (JP)
(72) Inventor: BAN, Takashi, KK Toyoda Jidoshokki Seisakusho, Kariya-shi, Aichi-ken 448 (JP); MORI, Hidefumi, KK Toyoda Jidoshokki Seisakusho, Kariya-shi, Aichi-ken 448 (JP); YAGI, Kiyoshi, KK Toyoda Jidoshokki Seisakusho, Kariya-shi, Aichi-ken 448 (JP); HIROSE, Tatsuya, KK Toyoda Jidoshokki Seisakusho, Kariya-shi, Aichi-ken 448 (JP); MOROI, Takahiro, KK Toyoda Jidoshokki Seisakusho, Kariya-shi, Aichi-ken 448 (JP); SUZUKI, Sigeru, KK Toyoda Jidoshokki Seisakusho, Kariya-shi, Aichi-ken 448 (JP); MIURA, Shintaro, KK Toyoda Jidoshokki Seisakusho, Kariya-shi, Aichi-ken 448 (JP); SATO, Tsutomu, KK Toyoda Jidoshokki Seisakusho, Kariya-shi, Aichi-ken 448 (JP); KITANI, Fumihiko, KK Toyoda Jidoshokki Seisakusho, Kariya-shi, Aichi-ken 448 (JP)
(74) Representative: Tiedtke, Harro, Dipl.-Ing.
(86) International application number: PCT/JP96/03207
(87) International publication number: WO 97/16323

(56) References cited:
- EP-A- 0 361 053
- JP-U- 3 098 107
- US-A- 3 591 079
- US-A- 4 285 329

## Description

### Technical Field

The present invention relates to a variable capacity type viscous heater in which a viscous fluid is caused to generate heat by shearing. The resulting heat is utilized as a thermal source for heating by carrying out heat exchange with a circulating fluid which circulates in a radiator chamber.

### Background Art

As a conventional engineering technique, Japanese Unexamined Patent Publication (KOKAI) No. 3-98,107 discloses a variable capacity type viscous heater. In this viscous heater, a front housing and a rear housing are disposed and fastened so as to face with each other, and form a heat-generating chamber and a water jacket therein. The water jacket is disposed around an outer region of the heat-generating chamber. In the water jacket, circulating water is circulated so that it is taken in through a water inlet port, and that it is delivered out to an external heating circuit through a water outlet port. In the front and rear housings, a driving shaft is held rotatably via a bearing apparatus. To the driving shaft, a rotor is fixed so that it can rotate in the heat-generating chamber. A wall surface of the heat-generating chamber and an outer surface of the rotor constitute axial labyrinth grooves which approach to each other. In a space between the wall surface of the heat-generating chamber and the outer surface of the rotor, a viscous fluid, such as a silicone oil, is interposed.

The characteristic arrangements of the viscous heater are as follows: An upper cover and a lower cover, which are provided with a diaphragm therein, are disposed below the front and rear housings. A control chamber is defined by the upper cover and the diaphragm. The heat-generating chamber is communicated with the atmosphere by a through hole which is drilled through at the top end of the front and rear housings, and the heat-generating chamber is also communicated with the control chamber by a communication pipe which is disposed in the upper cover. The diaphragm is capable of adjusting the internal volume of the control chamber by means of a manifold negative pressure, a coiled spring, and the like.

In the viscous heater built into a vehicle heating apparatus, the rotor rotates in the heat-generating chamber when the driving shaft is driven by an engine. Accordingly, the viscous fluid is caused to generate heat by shearing in the space between the wall surface of the heat-generating chamber and the outer surface of the rotor. The thus generated heat is heat-exchanged to the circulating water in the water jacket. The heated circulating water is used at the heating circuit to heat a passenger compartment of a vehicle.

According to the publication, the capacity variation of the viscous heater is effected as follows. For example, when the heating is carried out too strongly, the diaphragm is displaced downward by means of a manifold negative pressure, thereby enlarging the internal volume of the control chamber. Thus, the heat generation is reduced in the space between the wall surface of the heat-generating chamber and the outer surface of the rotor to relieve the heating (i.e., the capacity reduction), because the viscous fluid, held in the heat-generating chamber, is collected into the control chamber. On the contrary, when the heating is carried out too weakly, the diaphragm is displaced upward by an action of an atmospheric pressure adjustment hole and a coil spring, thereby reducing the internal volume of the control chamber. Thus, the heat generation is increased in the space between the wall surface of the heat-generating chamber and the outer surface of the rotor to intensify the heating (i.e., the capacity enlargement), because the viscous fluid, held in the control chamber, is delivered out into the heat-generating chamber.

However, in the above-described conventional viscous hater, the viscous fluid should be collected into the control chamber by means of its own weight when reducing the capacity, because the control chamber is disposed below the heat-generating chamber. In this instance, it was found difficult for the viscous fluid to move downward when the rotor is kept rotated. In particular, in the viscous heater, it is further difficult for the viscous fluid to move downward, because the wall surface of the heat-generating chamber and the outer surface of the rotor constitute the axial labyrinth grooves which approach to each other. Therefore, in the viscous heater, the capacity is less likely to be reduced when the heating is carried out too strongly, or when the heating is not needed.

Moreover, in the viscous heater, the viscous fluid is collected into the control chamber from the heat-generating chamber, and thereby a negative pressure arises in the heat-generating chamber. The resulting negative pressure is canceled by introducing fresh air via the through hole. Consequently, the viscous fluid contacts with the fresh air every time the capacity is reduced, and is replenished with the water, which is held in the air, at any time. As a result, the degradation by the water is likely to develop in the viscous. In this instance, the endurable heat-generating efficiency of the viscous fluid is deteriorated inevitably after a long period of service.

In addition, in the viscous heater, when the viscous fluid is not collected into the control chamber, and at the same time when the driving shaft is kept rotated at a high revolving speed, the viscous fluid, held in the heat-generating chamber, is heated to elevated temperatures unlimitedly, because the viscous heater is not provided with means for replacing the viscous fluid, held in the heat-generating chamber. Thus, the viscous fluid is degraded beyond its heat-resistant limit. In this instance, the heat generation is dropped after a high-speed operation.

EP 0 361 053 (closest prior art) discloses a variable capacity viscous heater comprising a heat-generating chamber and radiator chamber. The radiator chamber is arranged in the vicinity of the heat-generating chamber to secure a proper heat transfer. Further, there is provided a control chamber communicated with the heat-generating chamber via a collector passage and a supply passage. The collector passage is always open and pumps constantly the fluid out of the heat-generating chamber through the pressure build up by the relative motion between the rotor and the housing.

The capacity control of this device is achieved by selectively opening and closing the supply passage by means of a closing member. The closing member is moved by a spring-loaded lever actuated by a bimetal spring. When heating is carried out too weakly, an elastic means pushes the lever in a clockwise direction, thereby opening the closing member. In contrast thereto, when heating is carried out too strongly, the bimetal spring pushes the lever in a counterclockwise direction against the elastic means, thereby closing the closing member.

However, this device cannot control the flow of fluid through the collector passage, so that the freedom of design of the device is restricted. Moreover, the assembly and maintenance of such a device is very laborious.

The object of the present invention is to provide a variable capacity type viscous heater having an improved operation and an improved assembly and maintenance.

This object is achieved by the features of the characterizing portion of claim 1.

According to the present application, as outlined in claim 1, the collector passage is able to be opened and closed. In this way, capacity reduction may be carried out by discharging the viscous fluid from the heat generating chamber by way of the opened collector passage and supplying it to the control chamber. In contrast thereto, capacity enlargement may be carried out by closing the collector passage to stop the flow from the heat generating chamber to the control chamber. Due to the stopped discharge of viscous fluid from the heat generating chamber the capacity increases.

Since the flow resistance of the viscous fluid flowing through the collector passage is lower than that of the viscous fluid flowing through the supply passage due to the increased temperature of the viscous fluid being discharged from the heat generating chamber, the responsiveness of the device according to the invention is improved.

### Brief Description of Drawings

Fig. 1 is a vertical cross-sectional view of a variable capacity type viscous heater of a First Preferred Embodiment.
Fig. 2 is concerned with a rotary valve of the variable capacity type viscous heater of the First Preferred Embodiment, and is a plan view which is viewed on a front side.
Fig. 3 is concerned with a rear plate, etc., of the variable capacity type viscous heater of the First Preferred Embodiment, and is a plan view in the capacity enlargement, plan view which is viewed on a front side.
Fig. 4 is concerned with the rear plate, etc., of the variable capacity type viscous heater of the First Preferred Embodiment, and is a plan view in the capacity reduction, plan view which is viewed on a front side.
Fig. 5 is concerned with the variable capacity type viscous heater of the First Preferred Embodiment, and is a timing chart which illustrates the relationship between the opening and closing of a collector passage and a supply passage and the rotary angle of the rotary valve.
Fig. 6 is concerned with a rotary valve of a variable capacity type viscous heater of a Second Preferred Embodiment, and is a plan view which is viewed on a front side.
Fig. 7 is concerned with a rear plate, etc., of the variable capacity type viscous heater of the Second Preferred Embodiment, and is a plan view in the capacity enlargement, plan view which is viewed on a front side.
Fig. 8 is concerned with the rear plate, etc., of the variable capacity type viscous heater of the Second Preferred Embodiment, and is a plan view in the middle of the capacity enlargement, plan view which is viewed on a front side.
Fig. 9 is concerned with the rear plate, etc., of the variable capacity type viscous heater of the Second Preferred Embodiment, and is a plan view in the capacity reduction, plan view which is viewed on a front side.
Fig. 10 is concerned with the variable capacity type viscous heater of the Second Preferred Embodiment, and is a timing chart which illustrates the relationship between the opening and closing of a collector passage and a supply passage and the rotary angle of the rotary valve.
Fig. 11 is a vertical cross-sectional view of a variable capacity type viscous heater of a Third Preferred Embodiment.
Fig. 12 is concerned with a rotary valve of the variable capacity type viscous heater of the Third Preferred Embodiment, and is a plan view which is viewed on a front side.
Fig. 13 is concerned with a rear plate, etc., of the variable capacity type viscous heater of the Third Preferred Embodiment, and is a plan view in the capacity enlargement, plan view which is viewed on a front side.
Fig. 14 is concerned with the rear plate, etc., of the variable capacity type viscous heater of the Third Preferred Embodiment, and is a plan view in the capacity reduction, plan view which is viewed on a front side.
Fig. 15 is concerned with the variable capacity type viscous heater of the Third Preferred Embodiment, and is a timing chart which illustrates the relationship between the opening and closing of a collector passage and a supply passage and the rotary angle of the rotary valve.
Fig. 16 is concerned with a rear plate, etc., of a variable capacity type viscous heater of a Fourth Preferred Embodiment, and is a plan view which is viewed on a front side.
Fig. 17 is concerned with the variable capacity type viscous heater of the Fourth Preferred Embodiment, wherein:
   Fig. 17 (A) is an enlarged plan view which is viewed on a heat-generating chamber side of a first collector hole; and
   Fig. 17 (B) is an enlarged cross-sectional view around the first collector hole, etc.
Fig. 18 is concerned with the variable capacity type viscous heater of the Fourth Preferred Embodiment, and is an enlarged cross-sectional view around a supply groove, etc.
Fig. 19 is concerned with a variable capacity type viscous heater of a comparative example, wherein:
   Fig. 19 (A) is an enlarged plan view which is viewed on a heat-generating chamber side of a first collector hole; and
   Fig. 19 (B) is an enlarged cross-sectional view around the first collector hole, etc.
Fig. 20 is concerned with a variable capacity type viscous heater of a comparative example, and is a partly cross-sectional view which is viewed similarly to Fig. 16.
Fig. 21 is concerned with a variable capacity type viscous heater of a Fifth Preferred Embodiment, and is an enlarged plan view which is viewed on a heat-generating chamber side of a first collector hole.
Fig. 22 is concerned with a variable capacity type viscous heater of a Sixth Preferred Embodiment, and is an enlarged plan view which is viewed on a heat-generating chamber side of a first collector hole.
Fig. 23 is concerned with a variable capacity type viscous heater of a Seventh Preferred Embodiment, and is a partly cross-sectional view which is viewed similarly to Fig. 16.
Fig. 24 is a cross-sectional view of major portions of a variable capacity type viscous heater of an Eighth Preferred Embodiment.
Fig. 25 is concerned with a rotary valve of the variable capacity type viscous heater of the Eighth Preferred Embodiment, and is a plan view which is viewed on a front side.
Fig. 26 is concerned with a rear plate, etc., of the variable capacity type viscous heater of the Eighth Preferred Embodiment, and is a plan view in the capacity enlargement, plan view which is viewed on a front side.
Fig. 27 is concerned with the rear plate, etc., of the variable capacity type viscous heater of the Eighth Preferred Embodiment, and is a plan view in the middle of the capacity enlargement, plan view which is viewed on a front side.
Fig. 28 is concerned with the rear plate, etc., of the variable capacity type viscous heater of the Eighth Preferred Embodiment, and is a plan view in the capacity reduction, plan view which is viewed on a front side.
Fig. 29 is concerned with the variable capacity type viscous heater of the Eighth Preferred Embodiment, and is a timing chart which illustrates the relationship between the opening and closing of a collector passage, a supply passage and a gas passage and the rotary angle of the rotary valve.
Fig. 30 is a cross-sectional view of major portions of a variable capacity type viscous heater of a Ninth Preferred Embodiment.
Fig. 31 is a plan view of a rear plate, etc., of the variable capacity type viscous heater of the Ninth Preferred Embodiment.
Fig. 32 is a vertical cross-sectional view of a variable capacity type viscous heater of a Tenth Preferred Embodiment.
Fig. 33 is concerned with a variable capacity type viscous heater of an Eleventh Preferred Embodiment, and is a timing chart which illustrates the relationship between the opening and closing of a collector passage and a supply passage and the temperature of a control chamber.
Fig. 34 is a vertical cross-sectional view of a variable capacity type viscous heater of a Twelfth Preferred Embodiment.
Fig. 35 is concerned with the variable capacity type viscous heater of the Twelfth Preferred Embodiment, and is a cross-sectional view of major portions thereof in the low-revolving-speed operation.
Fig. 36 is concerned with the variable capacity type viscous heater of the Twelfth Preferred Embodiment, and is a cross-sectional view of major portions thereof in the high-revolving-speed operation.
Fig. 37 is concerned with the variable capacity type viscous heater of the Twelfth Preferred Embodiment, and is a timing chart which illustrates the relationship between the magnitude of the opening degree of a collector passage and a supply passage and the revolving speed.
Fig. 38 is a vertical cross-sectional view of major portions of a variable capacity type viscous heater of a Thirteenth Preferred Embodiment.
Fig. 39 is concerned with the variable capacity type viscous heater of the Thirteenth Preferred Embodiment, and is a cross-sectional view of major portions thereof in the low-revolving-speed operation.
Fig. 40 is concerned with the variable capacity type viscous heater of the Thirteenth Preferred Embodiment, and is a cross-sectional view of major portions thereof in the high-revolving-speed operation.
Fig. 41 is concerned with a variable capacity type viscous heater, and is a cross-sectional view of major portions thereof in the low-revolving-speed operation.
Fig. 42 is concerned with the variable capacity type viscous heater, and is a cross-sectional view of major portions thereof in the high-revolving-speed operation.
Fig. 43 is concerned with the variable capacity type viscous heater, wherein:
   Fig. 43 (A) is a model diagram which illustrates an enclosed space; and
   Fig. 43 (B) is a model diagram which illustrates a spool chamber.

### Best Mode for Carrying Out the Invention

First through Thirteenth Preferred Embodiments embodying the present invention set forth in the appended claims will be hereinafter described with reference to the drawings.

### (First Preferred Embodiment)

The variable capacity type viscous heater of the First Preferred Embodiment embodies Claims 1 through 5, 10, 14, 18, 19, 22, 25, 26, 32 and 37 through 40.

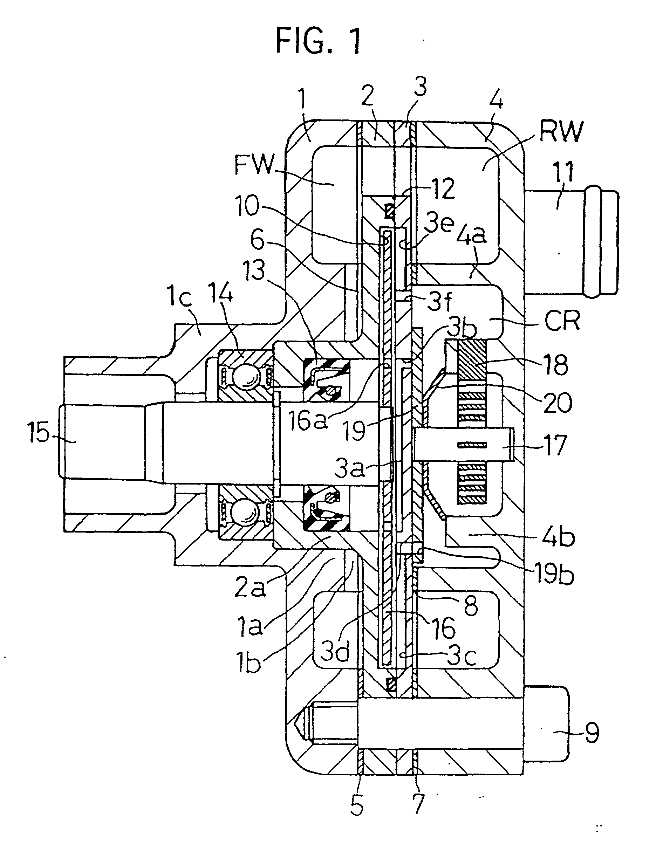

As illustrated in Fig. 1, in the viscous heater, a front housing body 1, a front plate 2, a rear plate 3 and a rear housing body 4 are overlapped and fastened by a plurality of through bolts 9 with gaskets 5 and 6 interposed between the front housing body 1 and the front plate 2, and with gaskets 7 and 8 interposed between the rear plate 3 and the rear housing body 4. Here, the front housing body 1, the front plate 2, the rear plate 3 and the rear housing body 4 constitute a housing.

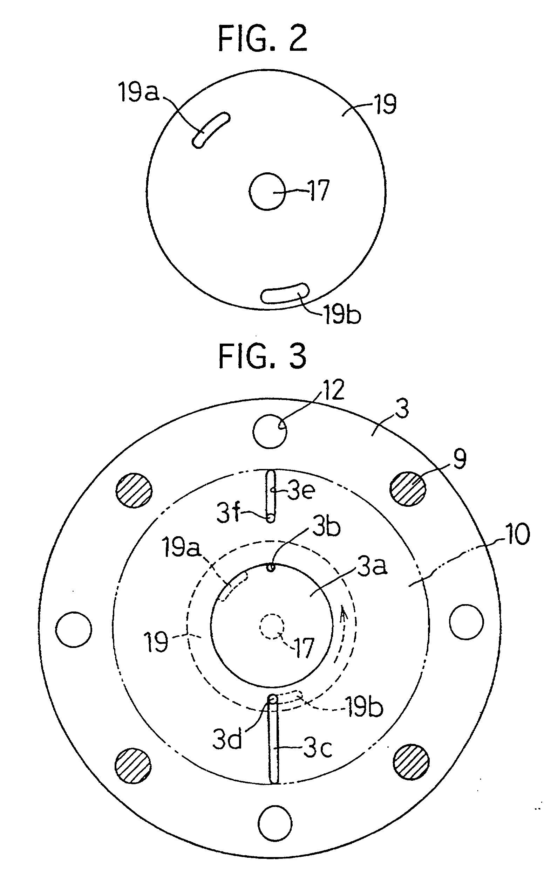

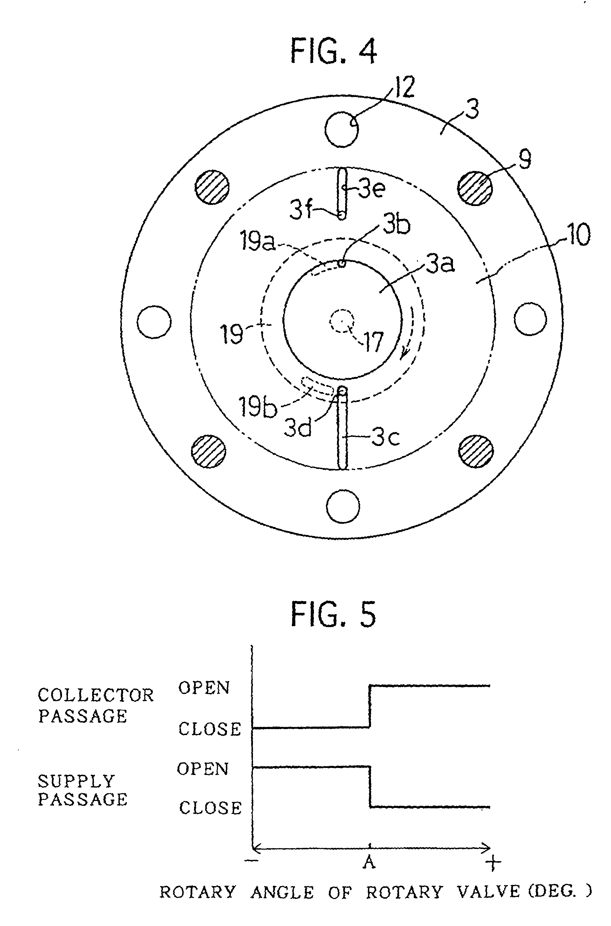

In a rear-end surface of the front plate 2, a concavity is dented flatly, and forms a heat-generating chamber 10 together with a flat front-end surface of the rear plate 3. Further, as also illustrated in Figs. 3 and 4, in a front-end surface of the rear plate 3, a collector concavity 3a is dented so as to face a central region of the heat-generating chamber 10. Note that, at an outside position in the collector concavity 3a, a first collector hole 3b is drilled through to a rear-end surface of the rear plate 3. Furthermore, in a front-end surface of the rear plate 3, a supply groove 3c is formed so as to extend from a bottom-side exterior of the collector concavity 3a to a bottom-side outer region of the heat-generating chamber 10. The supply groove 3c works as the distributor passage. Note that, at an inside position in the supply passage 3c, a first supply hole 3d is also drilled through to a rear-end surface of the rear plate 3. The supply groove 3c and the first supply hole 3d are designed to have a larger width or diameter than that of the collector concavity 3a and the first collector hole 3b, and thereby they readily supply a silicone oil, works as the viscous fluid, to the heat-generating chamber 10. Note that the supply groove 3a can preferably be formed longer than the position which corresponds to a rotor 16 described later. Moreover, in a front-end surface of the rear plate 3, a gas groove 3e is extended from a top-side exterior of the collector concavity 3a to a top-side outer region of the heat-generating chamber 10. The gas groove 3e constitutes part of the gas passage. Note that, at an inner side position in the gas groove 3e, a gas hole 3f is also drilled through to a rear-end surface of the rear plate 3. The gas hole 3f constitutes the rest of the gas passage.

As illustrated in Fig. 1, an inner surface of the front housing body 1 and a front-end surface of the front plate 2 form a front water jacket FW. The front water jacket FW works as the front radiator chamber neighboring in front of the heat-generating chamber 10. Whilst, on the rear housing body 4, a first rib 4a is protruded like a ring. The first rib 4a is brought into contact with the gasket 8. A rear-end surface of the rear plate 3 and an inner surface of the rear housing body 4, which is disposed outside the first rib 4a, form a rear water jacket RW. The rear water jacket RW works as the rear radiator chamber neighboring in rear of the heat-generating chamber 10. In addition, a rear-end surface of the rear plate 3 and an inner surface of the rear housing body 4, which is disposed inside with respect to the first rib 4a, form a control chamber CR which is communicated with the collector concavity 3a, the first supply hole 3d and the gas hole 3f.

In a rear surface of the rear housing body 4, a water inlet port 11 and a water outlet port (not shown) are formed next to each other. The water inlet port 11 and the water outlet port are communicated with the rear water jacket RW. Moreover, in the rear plate 3 and front plate 2, a plurality of water passages 12 are drilled through at equal intervals between the through bolts 9. The front water jacket FW and the rear water jacket RW are communicated with each other by the water passages 12.

In the control chamber CR disposed in the rear housing body 4, a second rib 4b is protruded like a ring. At the center of the second rib 4b, a valve shaft 17 is held rotatably. The second rib 4b is engaged with the outer end of a bimetal spiral spring 18, which works as a temperature sensitive actuator. The valve shaft 17 is engaged with the internal end of the bimetal spiral spring 18. Depending on whether a set heating temperature is too high or too low, a predetermined temperature is designed for displacing the bimetal spiral spring 18. Further, a disk-shaped rotary valve 19 is fixed at the front end of the valve shaft 17, and works as the first and second valve means independently. The rotary valve 19 is pressed by a coned disk spring 20 in a direction so as to close the openings of the first collector hole 3b and the first supply hole 3d on the side of the control chamber CR. The coned disk spring 20 is seated on a front-end surface of the second rib 4b, and works as the urging means. As also illustrated in Fig. 2, in the rotary valve 19, an arc-shaped second collector hole 19a and an arc-shaped second supply hole 19b are drilled through. Depending on the rotary angle of the rotary valve 19, the second collector hole 19a and the second supply hole 19b can be communicated with the first collector hole 3b or the first supply hole 3d. Note that the second supply hole 19b is designed to have a larger diameter than that of the second collector hole 19a so as to readily supply the silicone oil into the heat-generating chamber 10. Thus, the collector concavity 3a, the first collector hole 3d and the second collector hole 19a constitute the collector passage. Whilst, the supply groove 3c, the first supply hole 3d and the second supply hole 19b constitute the supply passage. With these arrangements of the viscous heater, the collector concavity 3a, etc., as well as the supply groove 3c, etc., can be opened and closed, and simultaneously the axial length of the viscous heater can be reduced.

Moreover, as illustrated in Fig. 1, on the rear plate 2, a boss 2a is protruded to extend forwardly in an axial direction. In the boss 2a, a shaft-sealing apparatus 13 is disposed so as to neighbor the heat-generating chamber 10. In the front housing body 1, an inner boss 1a is protruded to extend in an axial direction to the side of the heat-generating chamber 10. In the inner boss 1a, a plurality of openings 1b are drilled through on the side of the shaft-sealing apparatus 13. Accordingly, the front water jacket FW is formed adjacent to the shaft-sealing apparatus 13 by leaving a margin of the thickness of the boss 2a formed on the front plate 2. In addition, on the front housing body 1, an outer boss 1c is protruded to extend forwardly in an axial direction. In the outer boss 1c, a bearing apparatus 14 is disposed. By way of the shaft-sealing apparatus 13 and the bearing apparatus 14, a driving shaft 15 is held rotatably. At the trailing end of the driving shaft 15, a plate-shaped rotor 16 is press-fitted so that it can rotate in the heat-generating chamber 10. A silicone oil is interposed in the space between the wall surface of the heat-generating chamber 10 and the outer surface of the rotor 16. The silicone oil works as the viscous fluid. Note that the silicone oil is also held in the control chamber CR to such an extent that it usually immerses most of the bimetal spiral spring 18. However, inevitable air resides more or less, in addition to the silicone oil held in the heat-generating chamber 10, the collector concavity 3a, etc., the supply groove 3c, etc., and the control chamber CR. Note that the inevitable air results from the assembly operation of the viscous heater. In a central region of the rotor 16, a plurality of central apertures 16a are drilled through longitudinally. At the leading end of the driving shaft 15, a pulley (not shown) is fixed. The pulley is rotated by a vehicle engine via a belt.

In the viscous heater built-into a vehicle heating apparatus, the rotor 16 is rotated in the heat-generating chamber 10 when the driving shaft 15, illustrated in Fig. 1, is driven by the engine. Accordingly, the silicone oil is sheared in the space between the wall surface of the heat-generating chamber 10 and the outer surface of the rotor 16, thereby generating heat. The resulting heat is heat-exchanged to the circulating water flowing in the front and rear water jacket FW, RW, and the thus heated circulating water is used for heating a passenger compartment of a vehicle with the heating circuit.

In the mean time, when the rotor 16 is kept rotated, the silicone oil, held in the heat-generating chamber 10, tries to gather in the central region by the Weissenberg effect. In this instance, the silicone oil exhibits a liquid level of a large surface area perpendicularly to the axial center of the viscous heater, because the heat-generating chamber 10 and the rotor 16 having the above-described configurations are employed in the viscous heater. Consequently, the Weissenberg effect arises securely.

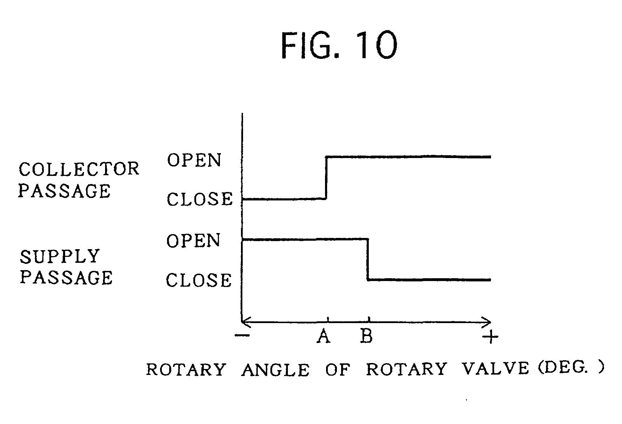

In operation, the heating is carried out too weakly when the temperature of the silicone oil, held in the control chamber CR, is low. Accordingly, as illustrated in Fig. 3, the bimetal spiral spring 18 rotates the rotary valve 19 to the left in the drawing by way of the valve shaft 17. In this instance, the first collector hole 3b and the second collector hole 19a are not communicated with each other, but the first supply hole 3d and the second supply hole 19b are communicated with each other. Hence, as designated at a rotary angle of -A° in Fig. 5, the collector concavity 3a, etc., are closed in the control chamber CR, and simultaneously the supply groove 3c, etc., are opened into the control chamber CR. Note that Fig. 5 shows the operational graph schematically, and that Figs. 10, 15, 29, 33 and 37 likewise show the operational graph schematically. As a result, the silicone oil, held in the heat-generating chamber 10, is not supplied into the control chamber CR by way of the collector concavity 3a, the first collector hole 3b and the second collector hole 19a. Whilst, the silicone oil, held in the control chamber CR, is supplied into the heat-generating chamber 10 by way of the second supply hole 19b, the first supply hole 3d and the supply groove 3c. In this instance, as can be appreciated from Fig. 1, the silicone oil, held in the control chamber CR, is readily delivered out into the space between the front wall surface of the heat-generating chamber 10 and the front side surface of the rotor 16 by way of the central apertures 16a. When the silicone oil is supplied into the space between the wall surface of the heat-generating chamber 10 and the outer surface of the rotor 16, the inevitable air is pushed by the silicone oil to move from the upper side of the heat-generating chamber 10 into the control chamber CR by way of the gas groove 3e and the gas hole 3f. Thus, the bubbles scarcely exist in the space between the wall surface of the heat-generating chamber 10 and the outer surface of the rotor 16. All in all, the heat generation is increased (i.e., the capacity enlargement) in the space between the wall surface of the heat-generating chamber 10 and the outer surface of the rotor 16, thereby intensifying the heating.

On the other hand, the heating is carried out too strongly when the temperature of the silicone oil, held in the control chamber CR, is high. Accordingly, as illustrated in Fig. 4, the bimetal spiral spring 18 rotates the rotary valve 19 slightly to the right in the drawing by way of the valve shaft 17. Thus, the first collector hole 3b and the second collector hole 19a are communicated with each other, and simultaneously the first supply hole 3d and the second supply hole 19b are not communicated with each other. Specifically, as designated at a rotary angle of +A° in Fig. 5, the collector concavity 3a, etc., are opened into the control chamber CR, and simultaneously the supply groove 3c, etc., are closed in the control chamber CR. As a result, the silicone oil, held in the heat-generating chamber 10, is collected into the control chamber CR by way of the collector concavity 3a, the first collector hole 3b and the second collector hole 19a. In this instance, as can be appreciated from Fig. 1, the silicone oil, held between the front wall surface of the heat-generating chamber 10 and the front side surface of the rotor 16, is readily collected into the collector chamber CR by way of the central apertures 16a. In addition, the silicone oil, collected into the control chamber CR, is not supplied into the heat-generating chamber 10 by way of the second supply hole 19b, the first supply hole 3d and the supply groove 3c. When the silicone oil is collected into the control chamber CR, the inevitable air is pushed by the silicone oil to move from the upper side of the control chamber CR into the heat-generating chamber 10 by way of the gas groove 3e and the gas hole 3f. Thus, the bubbles exist in the space between the wall surface of the heat-generating chamber 10 and the outer surface of the rotor 16. All in all, the heat generation is decreased (i.e., the capacity reduction) in the space between the wall surface of the heat-generating chamber 10 and the outer surface of the rotor 16, thereby relieving the heating.

In accordance with the thus simplified arrangement, the viscous heater can reliably carry out the capacity reduction and the capacity enlargement by the variation of the physical properties in itself. Therefore, the viscous heater does not necessarily require an electromagnetic clutch when the heating is needed or when the heating is not needed. In addition, the viscous heater does not need an external input for actuating the capacity variation. All in all, the viscous heater can realize the cost reduction and the weight reduction in heating apparatuses.

Further, in the viscous heater, the sum of the internal volumes of the enclosed heat-generating chamber 10, collector concavity 3a, etc., supply groove 3c, etc., and control chamber CR is little varied when the silicone oil is collected from the heat-generating chamber 10 into the control chamber CR, or when the silicone oil is supplied from the control chamber CR into the heat-generating chamber 10 reversibly. Accordingly, there hardly arises the negative pressure which results from the transfer of the silicone oil. As a result, the silicone oil is not brought into contact with newly introduced air, and is replenished with water, which is held in the air, at any time. Thus, the silicone oil is not deteriorated, and is not adversely affected by the air or water. Thus, in the viscous heater, the endurable heat generation can be inhibited from degrading even after a long period of service.

Furthermore, the viscous heater can produce such extra advantages that the number of component pats can be reduced, because the single independent rotary valve 19 is employed and controlled synchronously.

Moreover, the viscous heater is good in terms of boardability onto vehicles, or the like, because its axial length is reduced.

### (Second Preferred Embodiment)

The variable capacity type viscous heater of the Second Preferred Embodiment embodies Claims 1 through 5, 10, 14, 18, 19, 22, 25, 26, 30, 32 and 37 through 40.

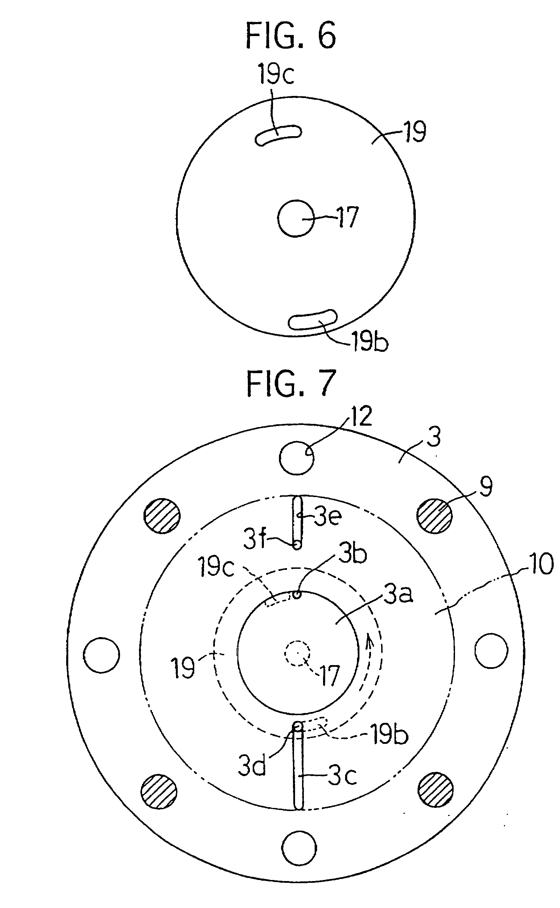

As illustrated in Figs. 6 through 10, a second collector hole 19c of a rotary valve 19 is drilled through at a position which is disposed slightly on the right side in the rotary direction with respect to that of the First Preferred Embodiment in the drawing. Unless otherwise specified, the Second Preferred Embodiment has the same arrangements as those the First Preferred Embodiment. Accordingly, the same arrangements will be described with the same reference numerals.

In the viscous heater, the heating is carried out too weakly when the temperature of the silicone oil, held in the control chamber CR, is low. Accordingly, as illustrated in Fig. 7, the rotary valve 19 is rotated to the left in the drawing. In this instance, the first collector hole 3b and the second collector hole 19c are not communicated with each other, but the first supply hole 3d and the second supply hole 19b are communicated with each other. Hence, as designated at a rotary angle of-A° in Fig. 10, the collector concavity 3a, etc., are closed in the control chamber CR, and simultaneously the supply groove 3c, etc., are opened into the control chamber CR. As a result, the silicone oil, held in the heat-generating chamber 10, is not collected into the control chamber CR, but the silicone oil, held in the control chamber CR, is supplied into the heat-generating chamber 10. All in all, the heat generation is increased (i.e., the capacity enlargement) in the space between the wall surface of the heat-generating chamber 10 and the outer surface of the rotor 16, thereby intensifying the heating.

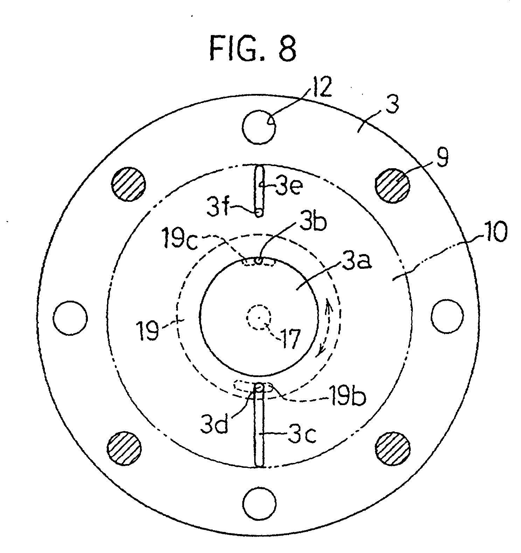

Then, as illustrated in Fig. 8, the rotary valve 19 is rotated slightly to the right in the drawing when the temperature of the silicone oil, held in the control chamber CR, is increased slightly. In this instance, the first collector hole 3b and the second collector hole 19a are communicated with each other, and the first supply hole 3d and the second supply hole 19b are communicated with each other. Hence, as designated at a rotary angle between A° and B° in Fig. 10, the collector concavity 3a, etc., are opened in the control chamber CR, and simultaneously the supply groove 3c, etc., are opened into the control chamber CR. As a result, the silicone oil, held in the heat-generating chamber 10, is collected into the control chamber CR by way of the collector concavity 3a, etc., by the Weissenberg effect, and the silicone oil, held in the control chamber CR, is also supplied into the heat-generating chamber 10 by way of the supply groove 3c, etc. When the silicone oil is thus circulated, the heat generation is increased quickly in the space between the wall surface of the heat-generating chamber 10 and the outer surface of the rotor 16, because the angular momentum of the rotor 16 is increased. Note that the angular momentum is required to accelerate the low-speed silicone oil, which is supplied from the supply groove 3c, etc., into the heat-generating chamber 10. Therefore, the viscous heater can intensify the heating in a short period of time.

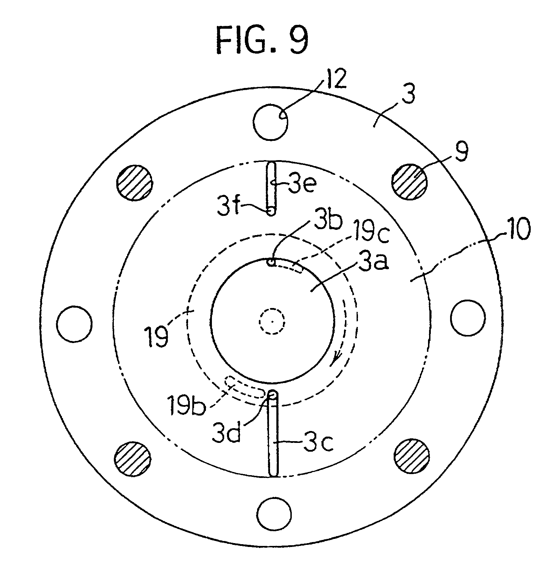

On the other hand, the heating is carried out too strongly when the temperature of the silicone oil, held in the control chamber CR, is high. Accordingly, as illustrated in Fig. 9, the rotary valve 19 is rotated to the right in the drawing. In this instance, the first collector hole 3b and the second collector hole 19c are communicated with each other, but the first supply hole 3d and the second supply hole 19b are not communicated with each other. Specifically, as designated at a rotary angle of +B° in Fig. 10, the collector concavity 3a, etc., are opened into the control chamber CR, and the supply groove 3c, etc., are closed in the control chamber CR. Consequently, in this instance, the silicone oil, held in the heat-generating chamber 10, is collected into the control chamber CR, but the silicone oil, collected in the control chamber 10, is not supplied into the heat-generating-chamber 10. As a result, the heat generation is decreased (i.e., the capacity reduction) in the space between the wall surface of the heat-generating chamber 10 and the outer surface of the rotor 16, thereby relieving the heating.

Unless otherwise specified, the viscous heater of the Second Preferred Embodiment can operate and produce advantages in the same manner as the First Preferred Embodiment.

### (Third Preferred Embodiment)

The variable capacity type viscous heater of the Third Preferred Embodiment embodies Claims 1 through 7, 10, 14, 18, 19, 22, 25, 26, 30, 32, 37 through 40.

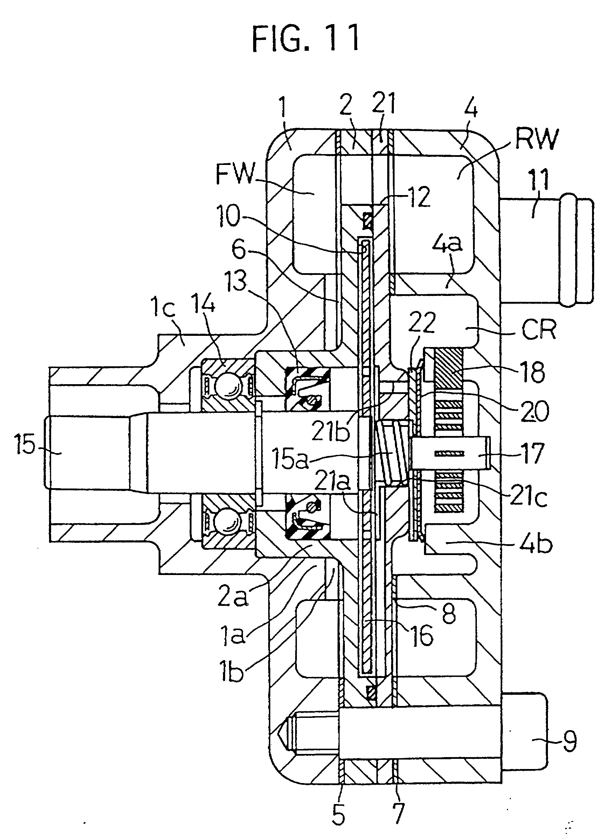

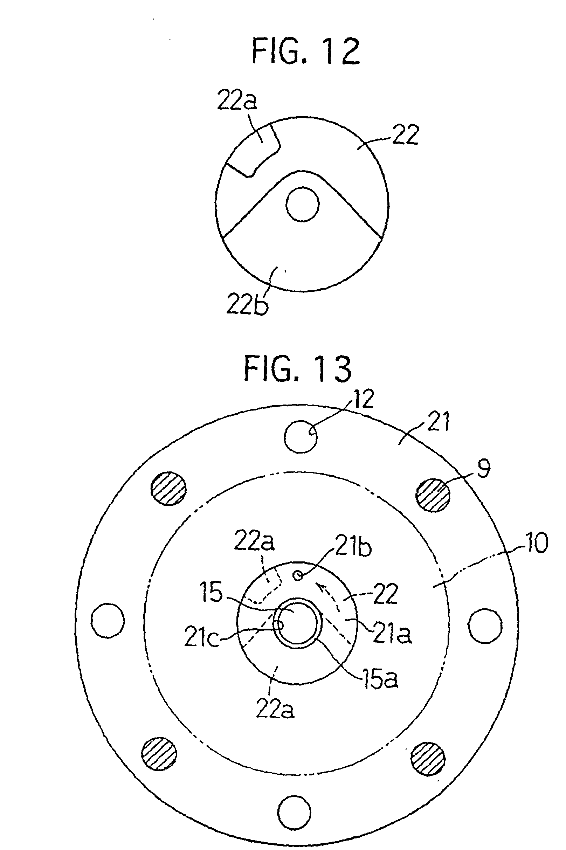

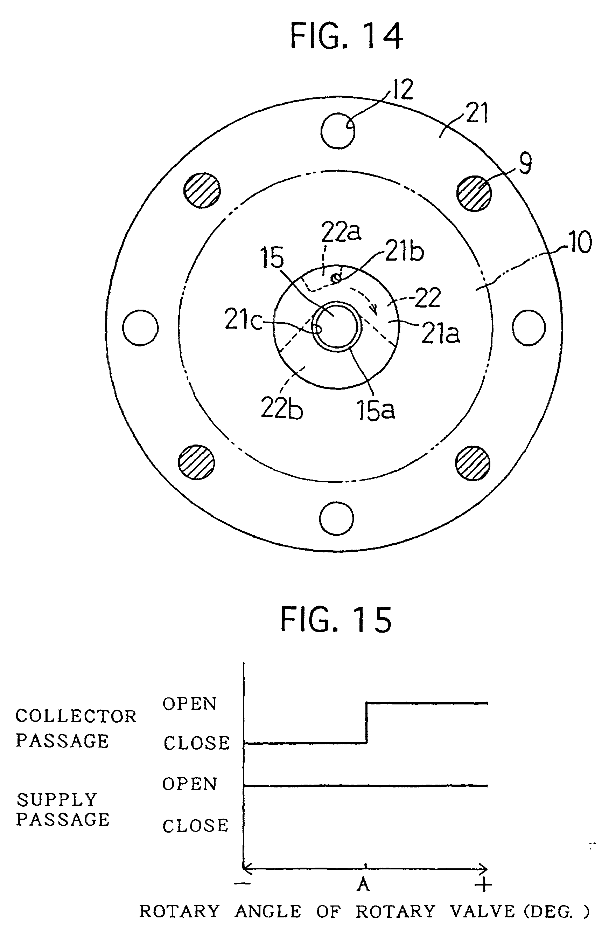

As illustrated in Fig. 11, the viscous heater employs a rear plate 21 which is protruded rearwardly in a central region. As illustrated in Figs. 13 and 14, on a front-end surface of the rear plate 21, a collector concavity 21a is dented so that it faces a central region of a heat-generating chamber 10. Further, in the rear plate 21, a first collector hole 21b is drilled through at a position on an outer side of the collector concavity 21a so that it extends to a rear-end surface of the rear plate 21. Furthermore, at the center of the front-end surface of the rear plate 21, a first supply hole 21c is drilled through so that it also extends to a rear-end surface of the rear plate 21. Moreover, as illustrated in Fig. 11, on an elongated rear-end peripheral surface of a driving shaft 15, a spiral groove 15a is formed. Note that the spiral groove 15a works as the compulsory supply means, and that the portion around the spiral groove 15a of the driving shaft 15 is accommodated in the first collector hole 21b so as to constitute a simple screw-type pump.

Moreover, the viscous heater employs a rotary valve 22 as illustrated in Fig. 12. In a front-end surface of the rotary valve 22, a sector-shaped collector groove 22a is dented so that it can communicate with the first collector 21b according to a rotary angle of the rotary valve 22, and a sector-shaped second supply groove 22b is dented so that it can communicate with the first supply hole 21c regardless of a rotary angle of the rotary valve 22. Thus, the collector concavity 21a, the first collector hole 21b and the second collector groove 22a constitute the collector passage. Whilst, the first supply hole 21c and the second supply groove 22b constitute the supply passage. In the arrangement, note that it is unnecessary to always communicate the control chamber CR with the heat-generating chamber 10 by way of the supply passage (e.g., the first supply hole 21c and the second supply groove 22b). Unless otherwise specified, the Third Preferred Embodiment has the same arrangements as those the First Preferred Embodiment. Accordingly, the same arrangements will be described with the same reference numerals.

In the thus constructed viscous heater, the heating is carried out too weakly when the temperature of the silicone oil, held in the control chamber CR, is low. Accordingly, as illustrated in Fig. 13, the rotary valve 22 is rotated to the left in the drawing. In this instance, the first collector hole 21b and the second collector groove 22a are not communicated with each other. Hence, as designated at a rotary angle of -A° in Fig. 15, the collector concavity 21a, etc., are closed in the control chamber CR, and the first supply hole 21c, etc., are opened into the control chamber CR. As a result, the silicone oil, held in the heat-generating chamber 10, is not supplied into the control chamber CR by way of the collector concavity 21a, the first collector hole 21b and the second collector hole 22a. Whilst, the spiral groove 15a forcibly supplies the silicone oil, collected in the control chamber CR, into the heat-generating chamber 10 by way of the first supply hole 21c when the driving shaft 15 is rotated. All in all, the heat generation is increased (i.e., the capacity enlargement) in the space between the wall surface of the heat-generating chamber 10 and the outer surface of the rotor 16, thereby intensifying the heating in a short period of time.

On the other hand, the heating is about to be carried out too strongly when the temperature of the silicone oil, held in the control chamber CR, is increased. Accordingly, as illustrated in Fig. 14, the rotary valve 22 is rotated to the right in the drawing. Thus, the first collector hole 21b and the second collector groove 22a are communicated with each other. Specifically, as designated at a rotary angle of +A° in Fig. 15, the collector concavity 21a, etc., are opened into the control chamber CR. As a result, even when the spiral groove 15a forcibly supplies the silicone oil, collected in the control chamber CR, into the heat-generating chamber 10, the silicone oil, held in the heat-generating chamber 10, is collected into the control chamber CR by way of the collector concavity 21a, the first collector hole 21b and the second collector groove 22a. As a result, the heat generation is decreased (i.e., the capacity reduction) in the space between the wall surface of the heat-generating chamber 10 and the outer surface of the rotor 16, thereby relieving the heating.

Unless otherwise specified, the viscous heater of the Third Preferred Embodiment can operate and produce advantages in the same manner as the First Preferred Embodiment.

### (Fourth Preferred Embodiment)

The variable capacity type viscous heater of the Fourth Preferred Embodiment embodies Claims 1 through 5, 8 through 11, 13, 14, 18, 19, 22, 25, 26, 32 and 37 through 40.

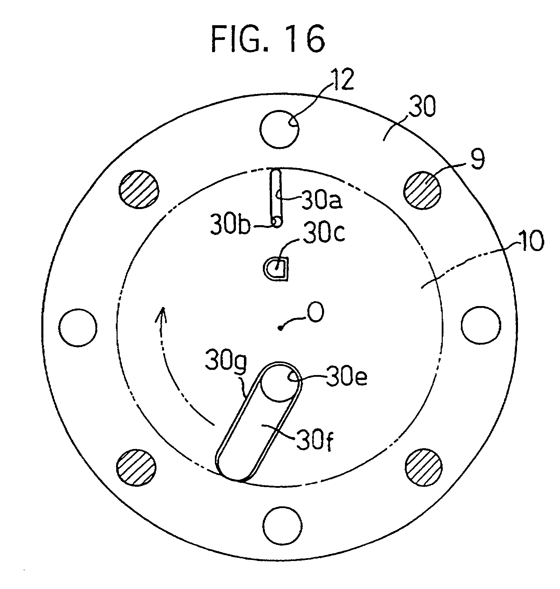

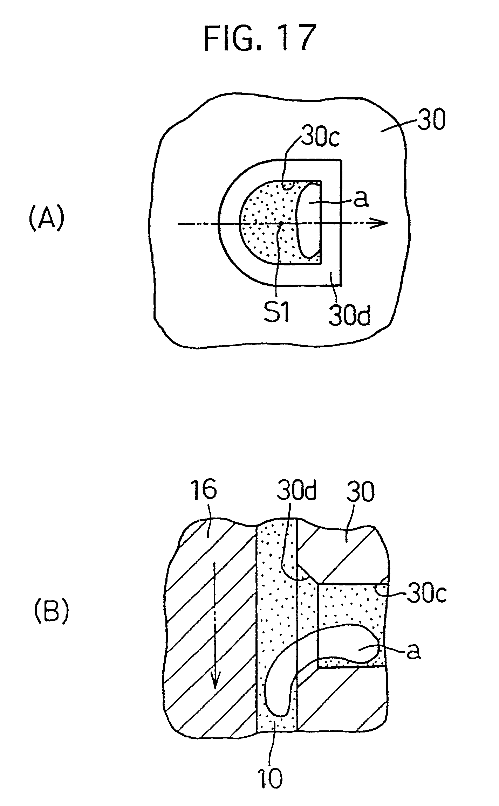

The viscous heater employs a rear plate 30 as illustrated in Fig. 16. In the rear plate 30, a gas passage is formed. For example, the gas passage includes a gas groove 30a, and a gas hole 30b. The gas groove 30a is dented in the rear plate 30, and is extended from a top end of a heat-generating chamber 10 to an inner side. The gas hole 30b is communicated with an inner end of the gas groove 30a, and is drilled through up to an upper end of a control chamber CR. Note that the gas groove 30a is chamfered around the opening thereof on the side of the heat-generating chamber 10 (not shown in the drawing). Further, in the rear plate 30, a first collector hole 30c is drilled through at an upper position in a central region of the rear plate 30. Note that the first collector hole 30c works as the collector passage. As illustrated in Figs. 17 (A) and (B), the opening of the first collector hole 30c is formed like an arc on the side of the heat-generating chamber 10. The opening of the first collector hole 30c includes an arc-shaped portion which is formed about the center S1 on an opposite rim on a rear side with respect to a rotary direction of a rotor 16 shown by an alternate-long-and-two-dash line of Fig. 17 (A), and a linear portion which is on another opposite rim on a front side with respect to the rotary direction of the rotor 16. Furthermore, the first collector hole 30c is subjected to chamfering 30d around the opening on a side of the heat-generating chamber 10.

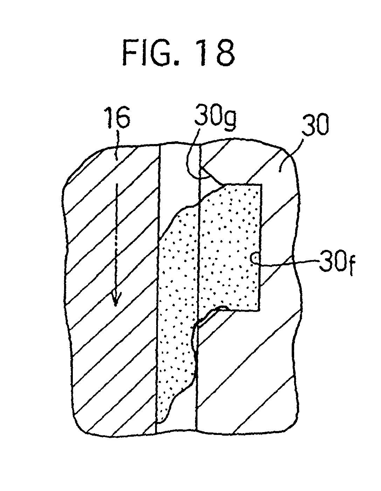

Moreover, as illustrated in Fig. 16, at a lower position in a central region of the rear plate 30, a first supply hole 30e is also drilled through up to a rear end surface of the rear plate 30. The first supply hole 30e has a larger communicating area than that of the first supply hole 30c, and works as part of the supply passage. In addition, as illustrated in Fig. 18, a supply groove 30f is dented in the rear plate 30. The supply groove 30f is opened on a side of the heat-generating chamber 10, and is communicated with the first supply hole 30e at an inner end. Thus, the supply groove 30f constitutes the rest of the supply passage. Note that the supply groove 30f works as the distributor passage. As illustrated in Fig. 16, the supply groove 30f is extended to an outer periphery of the rotor 16, and is inclined with respect to a diametric direction of the rotor 16 on a forward side with respect to the rotary direction of the rotor 16 shown by an alternate-long-and-two-dash line of Fig. 16. As illustrated in Fig. 18, the supply groove 30f is subjected to chamfering 30g around the opening on a side of the heat-generating chamber 10. Unless otherwise specified, the Fourth Preferred Embodiment has the same arrangements as those the First Preferred Embodiment. Accordingly, the same arrangements will be described with the same reference numerals.

In the thus constructed viscous heater, the rotor 16 rotates.in the heat-generating chamber 10, thereby supplying the silicone.oil, held in the control chamber CR, into the heat-generating chamber 10 by way of the supply groove 30f and the first supply hole 30e by the own weight of the silicone oil and the extendible viscosity thereof. In this instance, the silicone oil, collected in the control chamber CR, is supplied to an outer peripheral region of the heat-generating chamber 10 by way of the supply groove 30f smoothly and quickly. Then, the silicone oil, supplied to the outer peripheral region of the heat-generating chamber 10, is developed by the Weissenberg effect up to the central region of the heat-generating chamber 10 over the entire region quickly.

### (Evaluation)

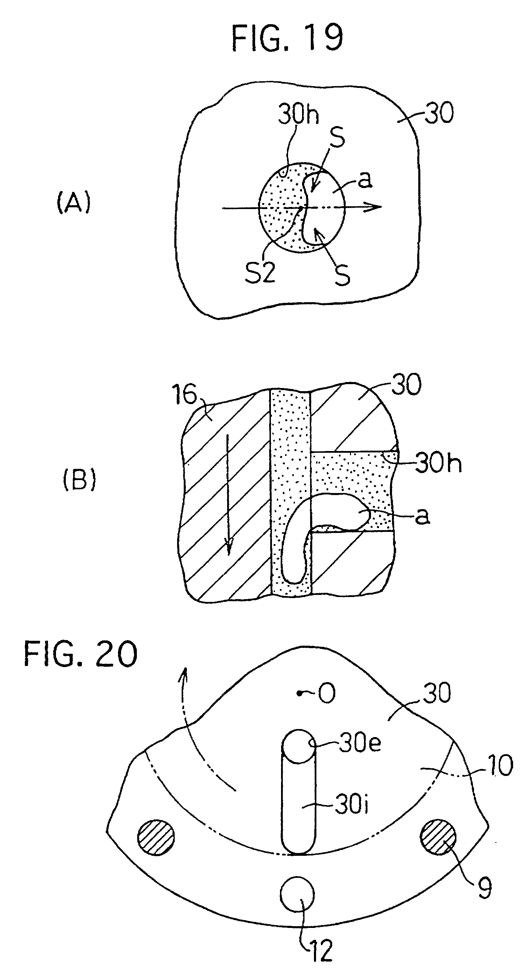

As a comparative example, a viscous heater is prepared as illustrated in Figs. 19 and 20. Note that the comparative viscous heater embodies Claims 1 through 5, 10, 14, 18, 19, 22, 25, 26, 32 and 37 through 40, but does not embody Claims 8 through 10, 12 and 13.

For instance, as illustrated in Figs. 19 (A) and (B), in the comparative viscous heater, a first collector hole 30h is drilled through in a rear plate 30. The first collector hole 30h is formed as a circular configuration, which has the center at S2, in cross-section. Note that the first collector hole 30h is not chamfered around the opening on a side of a heat-generating chamber 10. Further, as illustrated in Fig. 20, a supply groove 30i is dented in the rear plate 30. The supply groove 30i is extended to an outer periphery of a rotor 16, but is not inclined with respect to a diametric direction of the rotor 16 on a forward side with respect to the rotary direction of the rotor 16 shown by an alternate-long-and-two-dash line of Fig. 20. Note that the supply groove 30i is not chamfered around the opening on a side of the heat-generating chamber 10. Unless otherwise specified, the comparative viscous heater has the same arrangements as those the Fourth Preferred Embodiment.

In the thus constructed comparative viscous heater, bubbles "a", which are mingled in the silicone oil, are less likely to move to the control chamber CR smoothly and quickly. The disadvantage is believed to be caused by the fact that the bubbles "a" receive a relatively large contraction force "s" in the first collector hole 30h. Unless otherwise specified, the contraction force "s" is hereinafter shown by a vector in the drawing. The relatively large contraction force "s" is exerted to the bubbles "a" from the forward-side rim of the rotor 16 with respect to the rotary direction of the rotor 16, because the first collector hole 30h is formed as a general circular configuration in cross-section as illustrated in Figs. 19 (A) and (B). Additionally, it is believed that the bubbles "a" are less likely to move into the first collector hole 30h, because the opening of the first collector hole 30h is formed substantially perpendicularly on the side of the heat-generating chamber 10.

Moreover, in the thus constructed comparative viscous heater, the silicone oil, collected in the control chamber CR, is extremely less likely to be supplied to an outer peripheral region of the heat-generating chamber 10. The disadvantage is believed to be caused by the following arrangement: the supply groove 30i is extended to an outer periphery of the rotor 16 without inclination as illustrated in Fig. 20. As a result, the silicone oil, held in the supply groove 30i, is pressed onto a lateral-wall side of the supply groove 30i by the rotation of the rotor 16. Thus, the silicone oil is believed to be less likely to move to an outer peripheral side of the rotor 16. Additionally, it is believed that the silicone oil is less likely to move into the heat-generating chamber 10, because the opening of the supply groove 30i is formed substantially perpendicularly on the side of the heat-generating chamber 10.

On the other hand, in the viscous heater of the Fourth Preferred Embodiment, the first collector hole 30c is formed as a configuration which is less likely to exert the large contraction force "s" to the bubbles "a". In addition, the bubbles "a" are likely to move into the control chamber CR smoothly and quickly, because the opening of the first collector hole 30c is subjected to the chamfering 30e on the side of the heat-generating chamber 10.

Moreover, as illustrated in Figs. 16 and 18, in the viscous heater of the Fourth Preferred Embodiment, the supply groove 30f is extended to an outer periphery of the rotor 16 while it is inclined with respect to a diametric direction of the rotor 16 on a forward side with respect to the rotary direction of the rotor 16. In addition, the supply groove 30f is provided with the chamfering 30g. As a result, the silicone oil, held in the control chamber CR, is supplied to the outer peripheral region of the heat-generating chamber 10 smoothly and quickly.

All in all, in the viscous heater of the Fourth Preferred Embodiment, it is understood that the heat generation is increased quickly in the space between the wall surface of the heat-generating chamber 10 and the outer surface of the rotor 16 right after starting the viscous heater, and in the capacity enlargement thereof.

### (Fifth Preferred Embodiment)

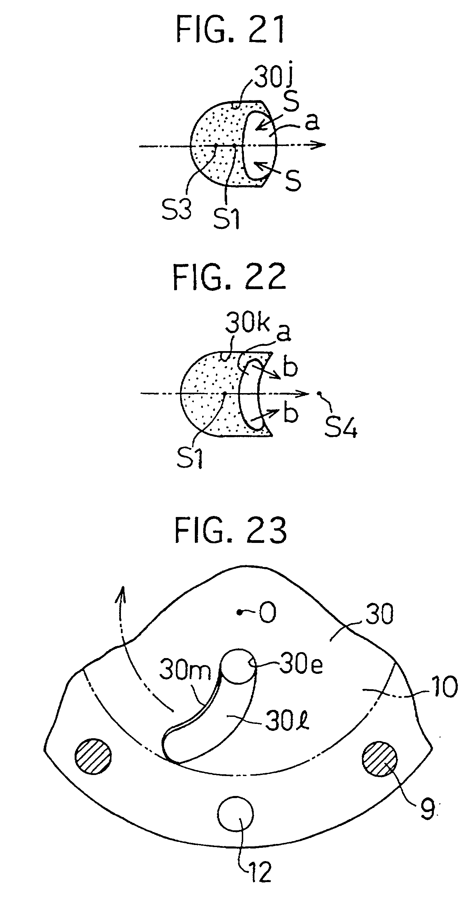

As illustrated in Fig. 21, in the viscous heater of the Fifth Preferred Embodiment, a first collector hole 30j is drilled through in a rear plate 30. On an opposite rim on a rear side with respect to a rotary direction of a rotor 16 shown by an alternate-long-and-two-dash line of the drawing, the first collector hole 30j is formed as an arc which is formed about the center S1. Likewise, on another opposite rim on a front side with respect to the rotary direction of the rotor 16, the first collector hole 30j is formed as an arc which is formed about the center S3. Note that the center S3 is disposed on a rear side with respect to the center S1 in the rotary direction of the rotor 16, and that the radius of the arc, which is disposed on an opposite rim and formed about the center S3, is larger than that of the arc, which is disposed on an opposite rim and formed about the center S1. Unless otherwise specified, the viscous heater of the Fifth Preferred Embodiment has the same arrangements as those the Fourth Preferred Embodiment.

In the thus constructed viscous heater, the first collector hole 30j has a configuration which little exerts a large contraction force "s" to bubbles "a". Hence, the viscous heater can operate and produce advantages in the same manner as the Fourth Preferred Embodiment.

### (Sixth Preferred Embodiment)

As illustrated in Fig. 22, in the viscous heater of the Sixth Preferred Embodiment, a first collector hole 30k is drilled through in a rear plate 30. On an opposite rim on a rear side with respect to a rotary direction of a rotor 16 shown by an alternate-long-and-two-dash line of the drawing, the first collector hole 30k is formed as an arc which is formed about the center S1. Likewise, on another opposite rim on a front side with respect to the rotary direction of the rotor 16, the first collector hole 30k is formed as an arc which is formed about the center S4. Note that the center S4 is disposed on a front side with respect to the center S1 in the rotary direction of the rotor 16, and that the radius of the arc, which is disposed on another opposite rim and formed about the center S4, is larger than that of the arc, which is disposed on an opposite rim and formed about the center S1. Unless otherwise specified, the viscous heater of the Sixth Preferred Embodiment has the same arrangements as those the Fourth Preferred Embodiment.

In the thus constructed viscous heater, the first collector hole 30k has a configuration which can exert an expansion force "b" to bubbles "a". Hence, the viscous heater can operate and produce advantages in the same manner as the Fourth Preferred Embodiment.

### (Seventh Preferred Embodiment)

The variable capacity type viscous heater of the Seventh Preferred Embodiment embodies Claims 1 through 5, 8 through 10, 12 through 14, 18, 19, 22, 25, 26, 32, and 37 through 40. As illustrated in Fig. 23, a supply groove 301 is dented in a rear plate 30. The supply groove 301 is extended to an outer periphery of a rotor 16, and is curved with respect to a diametric direction of the rotor 16 on a forward side with respect to a rotary direction of the rotor 16 shown by an alternate-long-and-two-dash line of the drawing. Moreover, the supply groove 301 is subjected to chamfering 30m around the opening on a side of a heat-generating chamber 10, but only on a front-side opposite rim with respect to the rotary direction of the rotor 16. Unless otherwise specified, the viscous heater of the Seventh Preferred Embodiment has the same arrangements as those the Fourth Preferred Embodiment.

In the thus constructed viscous heater, the silicone oil, held in the supply groove 301, is likely to be moved by the rotation of the rotor 16 to an outer peripheral side of the rotor 16. Hence, the viscous heater can operate and produce advantages in the same manner as the Fourth Preferred Embodiment.

### (Eighth Preferred Embodiment)

The variable capacity type viscous heater of the Eighth Preferred Embodiment embodies Claims 1 through 4, 10 through 12, 14, 18, 19, 22, 25, 26 and 30 through 40.

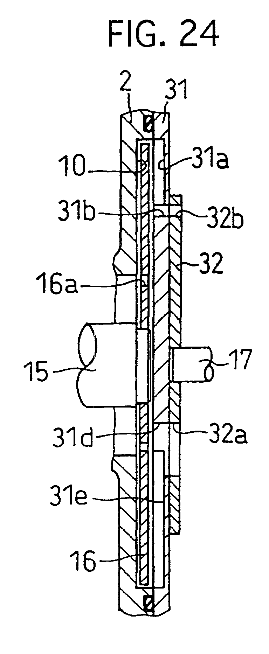

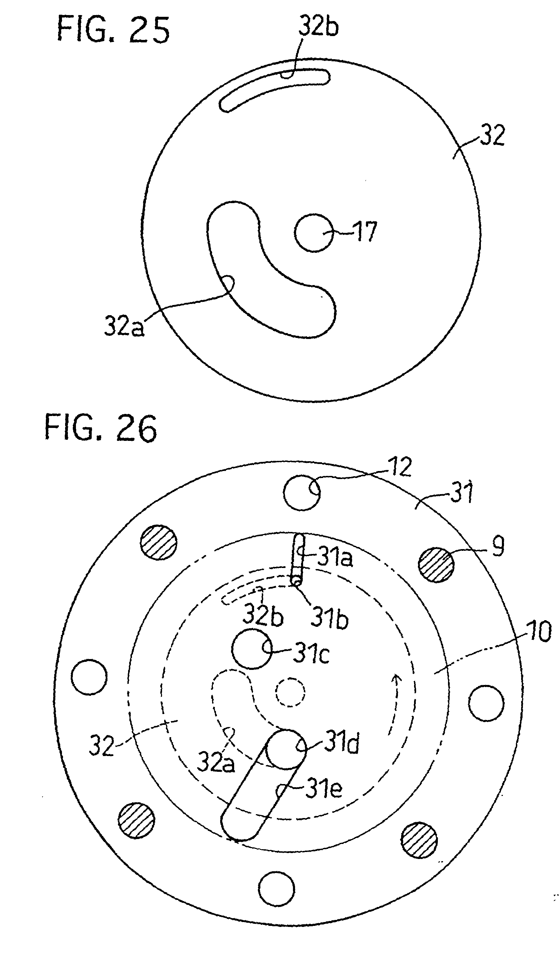

The viscous heater employs a rear plate 31 and a rotary valve 32 as illustrated in Fig. 24. As illustrated in Figs. 26 through 28, in the rear plate 31, a gas passage is formed. The gas passage includes a gas groove 31a, and a first gas hole 31b. The gas groove 31a is dented in the rear plate 30, and is extended from a top end of a heat-generating chamber 10 to an inner side. The gas hole 31b is communicated with an inner end of the gas groove 31a, and is drilled through up to an upper end of a control chamber CR. Further, in the rear plate 31, a first collector hole 31c is drilled through up to a rear-end surface of the rear plate 31. The first collector hole 31c is disposed at an upper position obliquely with respect to a central region of the rear plate 31, and is formed as a circular shape in cross-section. Note that the first collector hole 31c works as the collector passage. Furthermore, in the rear plate 31, a first supply hole 31d is also drilled through up to a rear-end surface of the rear plate 30 at a lower position in a central region of the rear plate 30. The first supply hole 31d has an identical diameter with that of the first collector hole 31c. Note that the first supply hole 31d works as part of the supply passage. Moreover, a supply groove 31e is dented in the rear plate 30. The supply groove 31e is opened on a side of the heat-generating chamber 10, and is communicated with the first supply hole 31d at an inner end, thereby constituting the rest of the supply passage. Note that the supply groove 31e works as the distributor passage. As illustrated in Figs. 26 through 28, the supply groove 31e is extended to an outer periphery of the rotor 16, and is inclined with respect to a diametric direction of the rotor 16 on a forward side with respect to the rotary direction of the rotor 16.

Whilst, the rotary valve 32 has a larger diameter than that of the First through Seventh Preferred Embodiments. As illustrated in Fig. 25, in the rotary valve 32, a single arc-shaped collector-and-supply slot 32a is drilled through. Depending on a rotary angle of the rotary valve 32, the collector-and-supply slot 32a can be communicated with the first collector hole 31c and the first supply hole 31d. Moreover, in the rotary valve 32, an arc-shaped second gas slot 32b is drilled through. Depending on a rotary angle of the rotary valve 32, the second gas slot 32b can be communicated with the first gas hole 31b. Unless otherwise specified, the Eighth Preferred Embodiment has the same arrangements as those the First Preferred Embodiment. Accordingly, the same arrangements will be described with the same reference numerals.

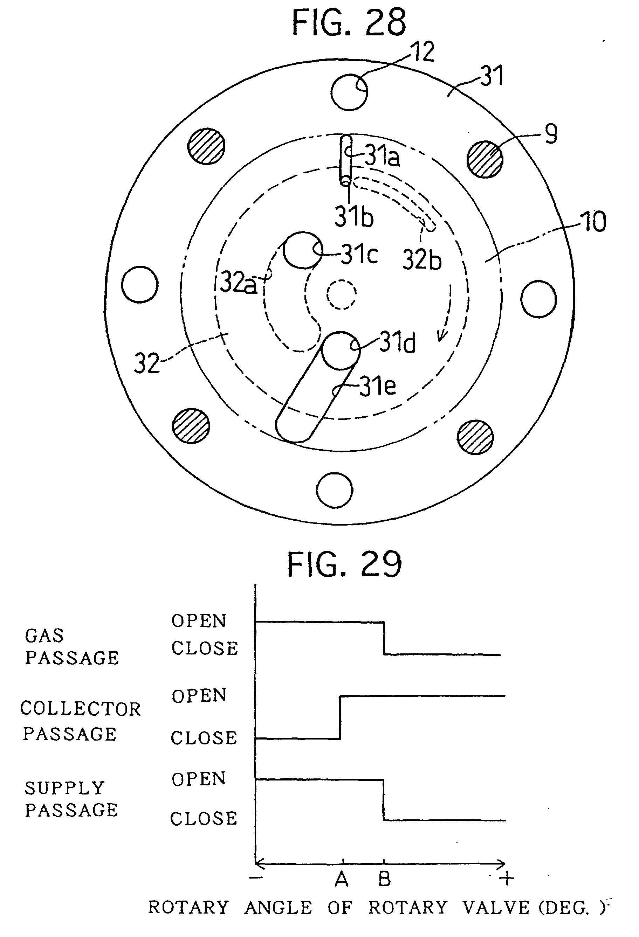

In the viscous heater, the heating is carried out too weakly when the temperature of the silicone oil, held in the control chamber CR, is low. Accordingly, as illustrated in Fig. 26, the rotary valve 32 is rotated to the left in the drawing. In this instance, the first collector hole 31c and the collector-and-supply slot 32a are not communicated with each other, but the first supply hole 31d and the collector-and-supply slot 32a are communicated with each other. Hence, as designated at a rotary angle of -A° in Fig. 29, the first collector hole 31c, etc., are closed in the control chamber CR, the first supply hole 31d, etc., are opened into the control chamber CR, and the gas groove 31a, etc., are further opened into the control chamber CR. At this moment, the gas groove 31a, etc., are opened by the rotary valve 32 so that the gas, held in the heat-generating chamber 10, is moved into the control chamber CR by way of the gas groove 31a, etc., in the capacity enlargement. As a result, the silicone oil, held in the heat-generating chamber 10, is likely to be supplied into the heat-generating chamber 10. All in all, the heating can be securely intensified.

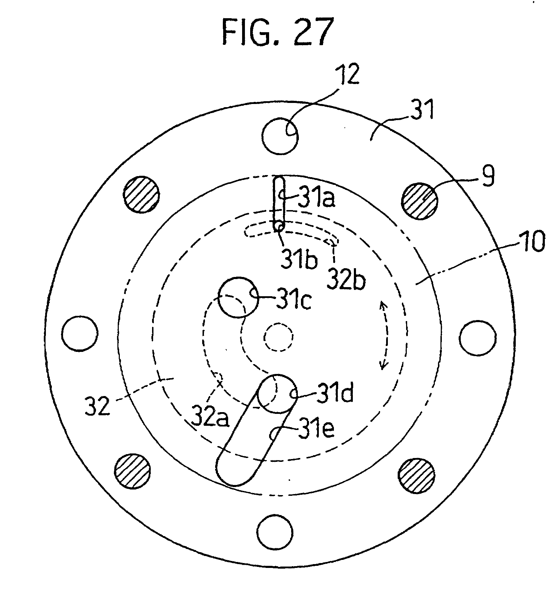

Then, as illustrated in Fig. 27, the rotary valve 32 is rotated slightly to the right in the drawing when the temperature of the silicone oil, held in the control chamber CR, is increased slightly. In this instance, the first collector hole 31c and the first supply hole 31d are communicated with the collector-and-supply slot 32a, and simultaneously the first gas hole 31b and the second gas hole 32b are communicated with each other. Hence, as designated at a rotary angle between A° and B° in Fig. 29, the collector hole 31c, etc., are opened in the control chamber CR, the first supply hole 31d, etc., are opened into the control chamber CR, and the gas groove 31a, etc., are opened into the control chamber CR. Also in this phase, the rotary valve 32 opens the gas groove 31a, etc., so that the flow of the silicone oil can be facilitated.

On the other hand, when the temperature of the silicone oil, held in the control chamber CR, is increased, the rotary valve 32 is rotated slightly to the right in the drawing as illustrated in Fig. 28. Thus, the first collector hole 31c and the collector-and-supply slot 32a are communicated with each other, but the first supply hole 31d and the collector-and-supply slot 32a are not communicated with each other. Simultaneously therewith, the first gas hole 31b and the second gas hole 32b are not communicated with each other. Specifically, as designated at a rotary angle of +B° in Fig. 29, the collector hole 31c, etc., are opened into the control chamber CR. At the same time, the first supply hole 31d, etc., are closed in the control chamber CR, and the gas groove 31a, etc., are closed in the control chamber CR. In this instance, the rotary valve 32 closes the gas passage 31a, etc., so that the gas can be inhibited from moving into the control chamber CR in the capacity reduction. As a result, the silicone oil can be collected facilitatively as the pressure increases in the heat-generating chamber 10. All in all, the heating can be securely relieved. Moreover, in the Eighth Preferred Embodiment, the rotary valve 32 can be simplified, because the collector hole 31c and the first supply hole 31d are opened and closed by the single collector-and-supply slot 32a which is drilled through in the rotary valve 32. Hence, the arrangement is advantageous in terms of costs.

Unless otherwise specified, the viscous heater of the Eighth Preferred Embodiment can operate and produce advantages in the same manner as the First Preferred Embodiment.

### (Ninth Preferred Embodiment)

The variable capacity type viscous heater of the Ninth Preferred Embodiment embodies Claims 1 through 4, 10 through 12, 14 through 16, 22 through 24, 30, 39 and 40.

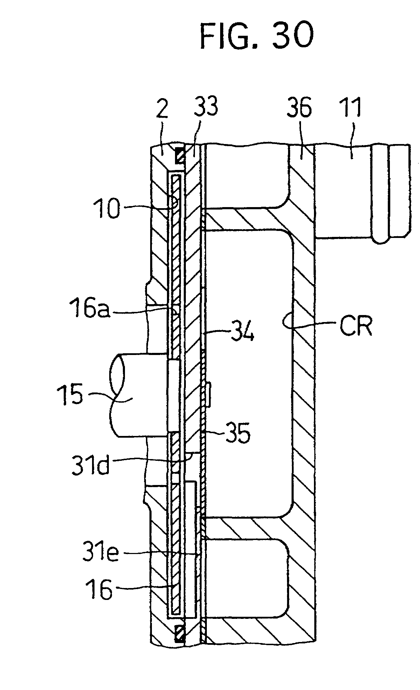

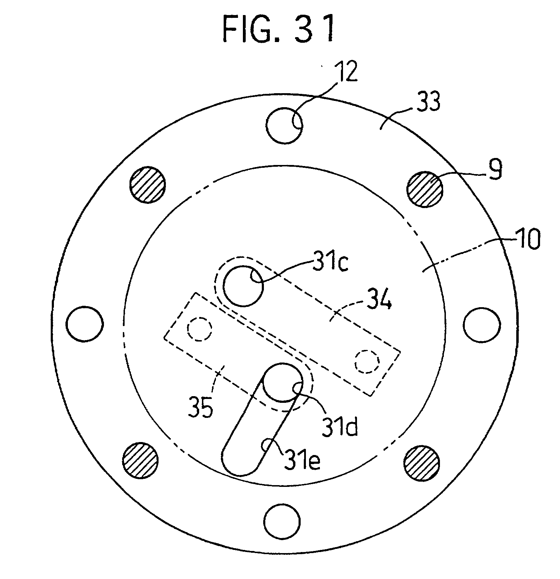

As illustrated in Figs. 30 and 31, the viscous heater employs a rear plate 33, a reed type flap valve 34, and a bimetal type flap valve 35. In the rear plate 31, a first collector hole 31c, etc., are used both as the collector passage and the gas passage. The reed type flap valve 34 closes the first collector hole 31c on a side of a control chamber CR. The bimetal type flap valve 35 closes a first supply hole 31d on a side of the control chamber CR. In addition, the viscous heater employs a rear housing body 36 which is free from the second rib protruding into the control chamber CR. Unless otherwise specified, the Ninth Preferred Embodiment has the same arrangements as those of the First and Eighth Preferred Embodiments. Accordingly, the same arrangements will be described with the same reference numerals.

In the thus constructed viscous heater, the reed type flap valve 34 opens the first collector hole 31c according to the pressure increment in the heat-generating chamber 10, thereby carrying out the capacity reduction. Note that the pressure increment results from the heat generated by the silicone oil. Whilst, the bimetal type flap valve 35 opens the first supply hole 31d according to the temperature decrement of the silicone oil, thereby carrying out the capacity enlargement.

Unless otherwise specified, the viscous heater of the Ninth Preferred Embodiment can operate and produce advantages in the same manner as the First Preferred Embodiment.

### (Tenth Preferred Embodiment)

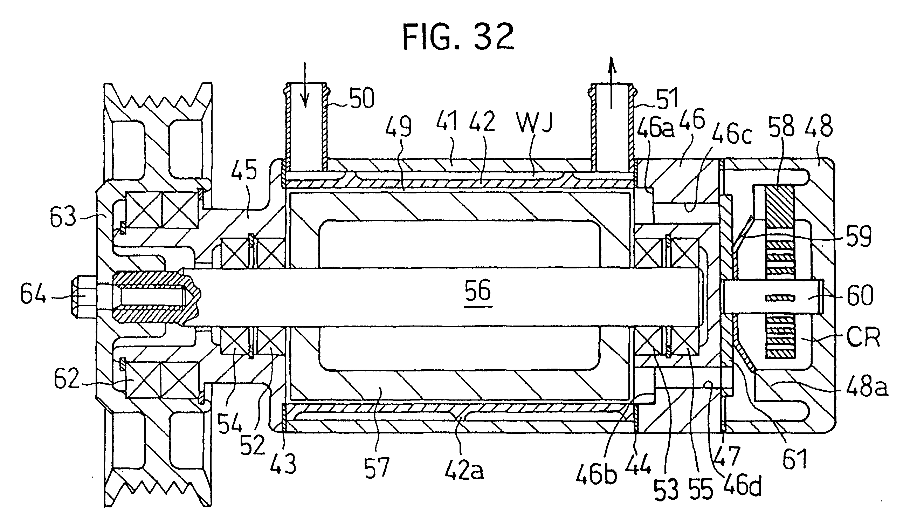

As illustrated in Fig. 32, the variable capacity type viscous heater of the Tenth Preferred Embodiment employs a cylinder-shaped rotor 57.

Specifically, in the viscous heater, a substantially cylinder-shaped cylinder block 42 is press-fitted into a cylinder-shaped central housing 41. At a front of the central housing 41 and the cylinder block 42, a front housing 45 is bonded by way of a gasket 43. At a rear of the central housing 41 and the cylinder block 42, a rear plate 46 is bonded by way of a gasket 44. The rear plate 46 is further bonded to a rear housing 48 by way of a gasket 47. In the cylinder block 42, a heat-generating chamber 49 is formed. On an outer peripheral surface of the cylinder block 42, a rib 42a is protruded in a spiral manner. The rib 42a is brought into contact with an inner peripheral surface of the central housing 41 so that it forms a spiral-shaped water jacket WJ. Note that the water jacket WJ works as the radiator chamber. On an outer peripheral surface of the central housing 41, a water inlet port 50 is protruded at a front end, and a water outlet port 51 is protruded at a rear end. Note that the water inlet port 50 and the water outlet port 51 are disposed within an identical outer peripheral surface of the central housing 41. The water inlet port 50 takes in circulating water, working as the circulating fluid, from an external heating circuit (not shown). The water outlet port 51 delivers the circulating water out to the heating circuit. The water inlet port 50 and the water outlet port 51 are communicated with the water jacket WJ.

Further, a pulley 63 is installed to the front housing 45 by way of a bearing apparatus 62. The pulley 63 is fastened to a driving shaft 56 by a bolt 64. The driving shaft 56 is held rotatably in the front housing 45 and the rear plate 46 by way of shaft-sealing apparatuses 52, 53 and bearing apparatuses 54, 55. The driving shaft 56 is further press-fitted into a rotor 57 which has a cylinder-shaped outer peripheral surface. The rotor 57 can thus rotate in the heat-generating chamber 49.

Furthermore, in a front-end surface of the rear plate 48, a collector groove 46a and a supply groove 46b are formed so as to extend to an outer peripheral region of the heat-generating chamber 49. Note that the supply groove 46b works as the distributor passage. At an inner position with respect to the collector groove 46a, a first supply hole 46c is drilled through to a rear-end surface of the rear plate 48. At an inner position with respect to the supply groove 46b, a first supply hole 46d is drilled through to a rear-end surface of the rear plate 48. In addition, in the rear housing 48, a control chamber CR is formed so that it can be communicated with the first collector hole 46c and the first supply hole 46d. In the control chamber CR, a rib 48a is protruded as a ring-like shape. In the rib 48a, similarly to the First Preferred Embodiment, a rotary valve 61 is disposed. The rotary valve 61 is engaged with a bimetal spiral spring 58, and is pressed by a coned disk spring 59. The rotary valve 61 is further installed to a valve shaft 60 so that it can be rotated by the valve shaft 60. Moreover, in the rotary valve 61, similarly to those of the First Preferred Embodiment, etc., a second collector hole and a second supply hole are drilled through.

In the thus constructed viscous heater, the heat is generated almost on a side of the outer peripheral surface of the rotor 57. On the other hand, the silicone oil is collected from an outer-peripheral side of the heat-generating chamber 49, and is supplied to an outer-peripheral side of the heat-generating chamber 49.

Unless otherwise specified, the viscous heater of the Tenth Preferred Embodiment can operate and produce advantages in the same manner as the First Preferred Embodiment, etc.

### (Eleventh Preferred Embodiment)

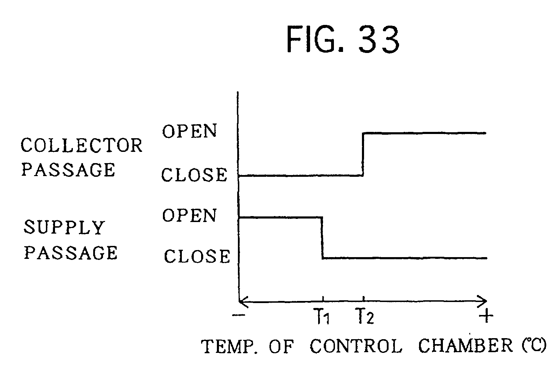

The variable capacity type viscous heater of the Eleventh Preferred Embodiment opens and closes a first collector hole and a first supply hole by a bimetal type flap valve. For instance, as illustrated in Fig. 33, when a temperature of the silicone oil, held in the control chamber CR, is -T₁ °C, the first collector hole, etc., are closed in the control chamber CR, and the first supply hole, etc., are opened into the control chamber CR. Moreover, when a temperature of the silicone oil, held in the control chamber CR, is in a range of from T₁ to T₂ °C, the first collector hole, etc., are kept being closed in the control chamber CR, and the first supply hole, etc., are closed in the control chamber CR. Additionally, when a temperature of the silicone oil, held in the control chamber CR, is +T₂ °C, the first collector hole, etc., are opened into the control chamber CR, and the first supply hole, etc., are kept being closed in the control chamber CR.

Except that the silicone oil is little flowed in the collecting operation, and that the silicone oil cannot be smoothly collected relatively, the viscous heater of the Eleventh Preferred Embodiment can operate and produce advantages in the same manner as the First Preferred Embodiment.

### (Twelfth Preferred Embodiment)

The variable capacity type viscous heater of the Twelfth Preferred Embodiment embodies Claims 1 through 5, 10, 11, 13, 14, 18, 20, 21, 22, 27, 28, 30, 39 and 40.

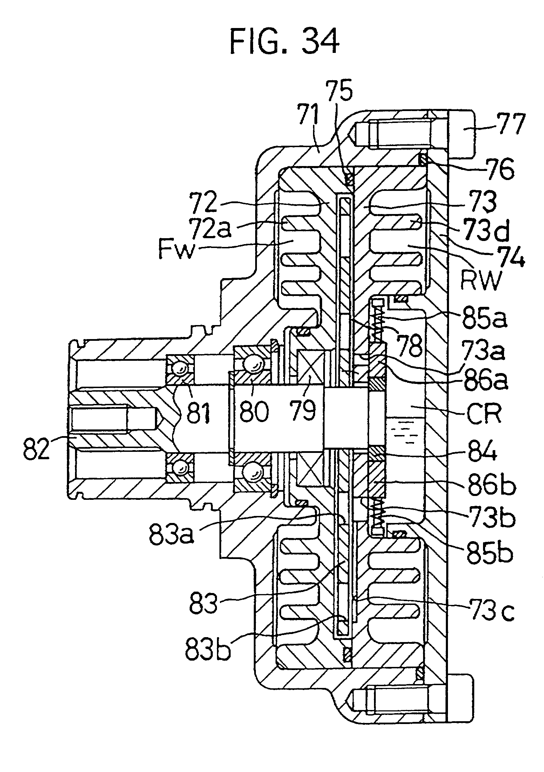

As illustrated in Fig. 34, in the variable capacity type viscous heater, a front plate 72 and a rear plate 73 are superimposed by way of an O-ring 75 disposed therebetween, and are accommodated in a front housing body 71. The front housing body 71 is fastened to a rear housing body 74 by a plurality of through bolts 77 so that it is closed by the rear housing body 74 with an O-ring 76 disposed therebetween.

In a rear-end surface of the front plate 72, a concavity is dented so that it forms a heat-generating chamber 78 together with a flat front-end surface of the rear plate 73. In the rear plate 73, a collector hole 73a is drilled through to a rear-end surface thereof so that it is communicated with an upper central region of the heat-generating chamber 78. Note that the collector hole 73a works as the collector passage. In the rear plate 73, a supply hole 73b is also drilled through to a rear-end surface thereof, and is disposed on an outside below the collector hole 73a. Note that the supply hole 73b works as the supply passage. A supply groove 73c is further extended from the supply hole 73b to a lower-side outer region of the heat-generating chamber 78. Note that the supply groove 73c works as the distributor passage.

Further, on an outer peripheral side of the front surface of the front plate 72, arc-shaped fins 72a are protruded forwardly. The front plate 72 thus forms a front water jacket FW together with an outer-peripheral-side inner surface of the front housing body 71. Note that the front water jacket FW works as the front radiator chamber which neighbors in front of the heat-generating chamber 78. Whilst, on an outer peripheral side of the rear surface of the rear plate 72 as well, arc-shaped fins 73d are protruded rearwardly. The rear plate 73 thus forms a rear water jacket RW together with an outer-peripheral-side inner surface of the rear housing body 74. Note that the rear water jacket FW works as the rear radiator chamber which neighbors in rear of the heat-generating chamber 78. In addition, an inner peripheral side of the rear surface of the rear plate 73 and an inner peripheral side of the inner surface of the rear housing body 74 form a control chamber CR which can be communicated with the collector hole 73a and the supply hole 73b.

Furthermore, on an outer peripheral surface of the front housing 71, a water inlet port (not shown) and a water outlet port (not shown) are formed next to each other. The water inlet port and the water outlet port are communicated with the front water jacket FW and the rear water jacket RW.

Moreover, in the front plate 72, a shaft-sealing apparatus 79 is disposed next to the heat-generating chamber 78. In the front housing body 71, bearing apparatuses 80, 81 are disposed. Accordingly, a driving shaft 82 is held rotatably in the front housing body 71 and the front plate 72 by way of the shaft-sealing apparatus 79 and the bearing apparatuses 80, 81. At a rear portion of the driving shaft 82, a flat plate-shaped rotor 83 is press-fitted so that it can rotate in the heat-generating chamber 78. In an inner peripheral region of the rotor 83, a plurality of central apertures 83a are drilled through so that they are communicated with the heat-generating chamber 78 longitudinally. In an outer peripheral region of the rotor 83, a plurality of through holes 83b are drilled through so as to enhance the effect of shearing a silicone oil later described. The silicone oil is interposed in the space between the wall surface of the heat-generating chamber 78 and the outer surface of the rotor 83, and in the control chamber CR. Note that the silicone oil works as the viscous fluid.

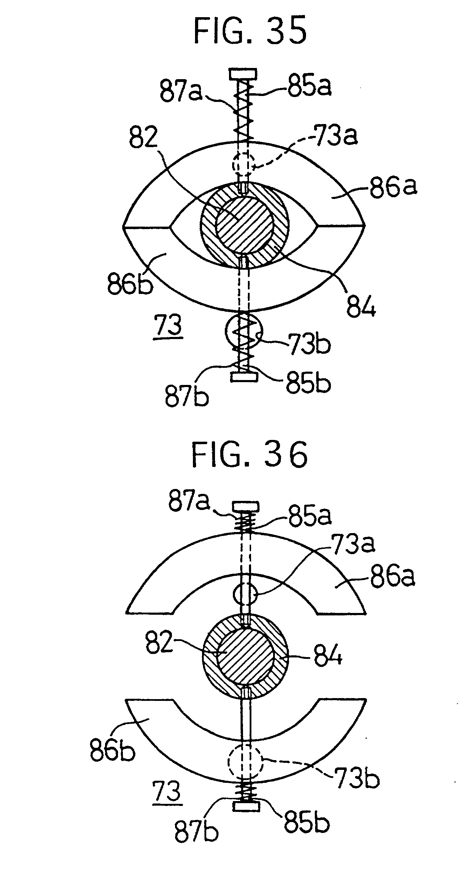

As illustrated in Figs. 35 and 36, a fixture ring 84 is fixed at a rear end of the driving shaft 82 in the control chamber CR. Further, the fixture ring 84 is fastened to guide pins 85a, 85b which can extend in a diametric direction. Furthermore, arc-shaped adjusting valves 86a, 86b are assembled with the guide pins 85a, 85b in a manner being movable in a diametric direction but being inhibited from rotating, because the guide pins 85a, 85b are formed as a square shape in cross-section. Moreover, the adjusting valves 86a, 86b are always urged by compression springs 87a, 87b which are disposed on a head side of the guide pins 85a, 85b. Unless otherwise specified, the Twelfth Preferred Embodiment has the same arrangements as those the First Preferred Embodiment, etc.

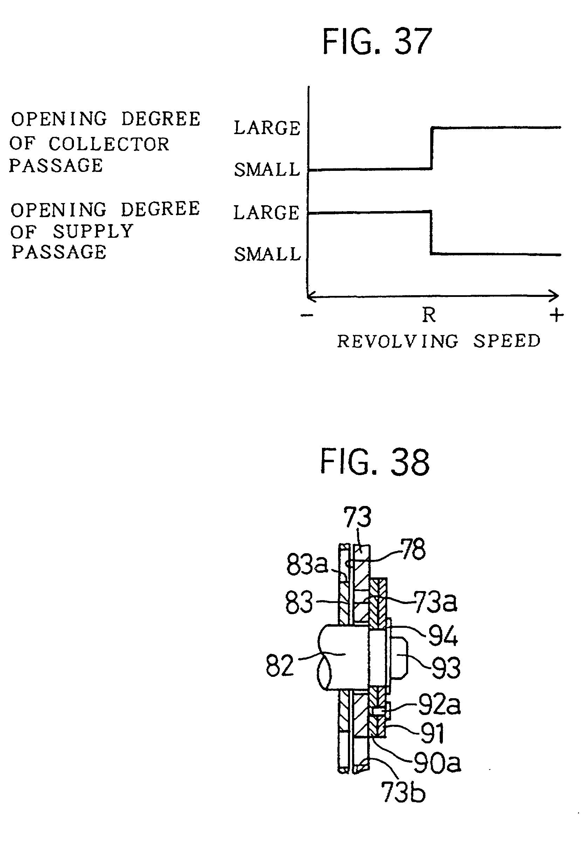

In the viscous heater, when a revolving speed of the driving shaft 82 is low: namely; when it is designated at a revolving speed of -R in Fig. 37, the adjusting valves 86a, 86b yield to the urging force of the compression springs 87a, 87b so that they are placed on a side of the driving shaft 82 as illustrated in Fig. 35. Accordingly, an opening degree of the collector hole 73a is small on a side of the control chamber CR, but an opening degree of the supply hole 73b is large on a side of the control chamber CR. Consequently, the collection of the silicone oil into the control chamber CR terminates virtually, but the supply of the silicone oil into the heat-generating chamber 78 continues virtually. All in all, the heat generation is increased in the space between the wall surface of the heat-generating chamber 78 and the outer surface of the rotor 83 (i.e., capacity enlargement), and thereby the heating is intensified.

On the other hand, when a revolving speed of the driving shaft 82 is high: namely; when it is designated at a revolving speed of +R in Fig. 37, the adjusting valves 86a, 86b are subjected to a large centrifugal force so that they are separated away from a side of the driving shaft 82 as illustrated in Fig. 36. Accordingly, an opening degree of the collector hole 73a is large on a side of the control chamber CR, but an opening degree of the supply hole 73b is small on a side of the control chamber CR. Consequently, the supply of the silicone oil into the heat-generating chamber 78 terminates virtually, but the collection of the silicone oil into the control chamber CR continues virtually. All in all, the silicone oil, held in the heat-generating chamber 78, is inhibited from elevating the temperature, and is eventually inhibited from deteriorating. In addition, the heat generation can be maintained even after the viscous heater is operated for a long period of time.

### (Thirteenth Preferred Embodiment)

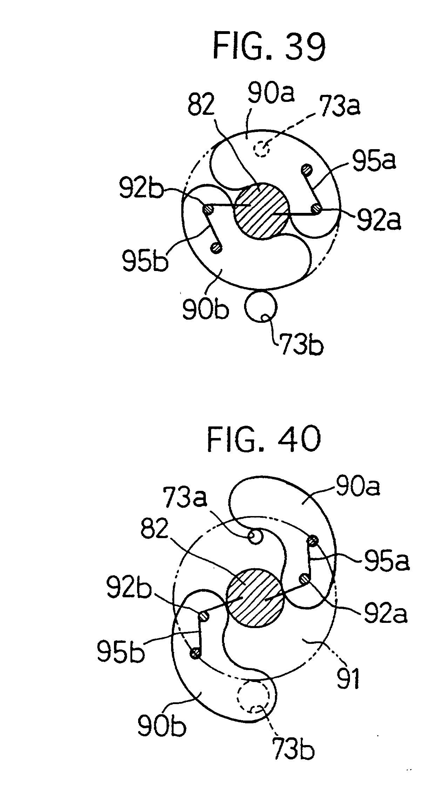

As illustrated in Figs. 38 through 40, the variable capacity type viscous heater of the Thirteenth Preferred Embodiment employs arc-shaped adjusting valves 90a, 90b. Specifically, as illustrated in Fig. 38, a fixture ring 91 is fixed to a rear end of a driving shaft 82 by a bolt 93 by way of a washer 94 in a control chamber CR. The adjusting valves 90a, 90b are then disposed under the fixture ring 91 swingably by swinging pins 92a, 92b which extend in an axial direction. As illustrated in Figs. 39 and 40, the adjusting valves 90a, 90b are provided with torsional coil springs 95a, 95b which are disposed between the driving shaft 82 and stoppers formed on the adjusting valves 90a, 90b. Thus, the torsional coil springs 95a, 95b always urge the adjusting valves 90a, 90b toward the driving shaft 82. Unless otherwise specified, the Thirteenth Preferred Embodiment has the same arrangements as those of the Twelfth Preferred Embodiment.

The viscous heater of the Thirteenth Preferred Embodiment can operate and produce advantages in the same manner as the Twelfth Preferred Embodiment.

Note that, in the viscous heater of the Twelfth or Thirteenth Preferred Embodiment, the collector hole 73a and the supply hole 73b are not opened or closed completely by the above-described adjusting valves 86a, 86b or by the adjusting valves 90a, 90b. Namely, the collector hole 73a and the supply hole 73b are opened or closed intermittently in accordance with an opening or closing angle with respect to one revolution of the driving shaft 82, for instance, in accordance with the extent of the opening degree as set forth in the Twelfth or Thirteenth Preferred Embodiment. However, taking the viscosity of the silicone oil, which is subjected to the collecting and supplying operations, into consideration, such an intermittent opening or closing can be effective as well, because the supplying amount or the collecting amount can be varied in accordance with how far the flowing of the silicone oil is continued or discontinued.

### (Comparative Example)

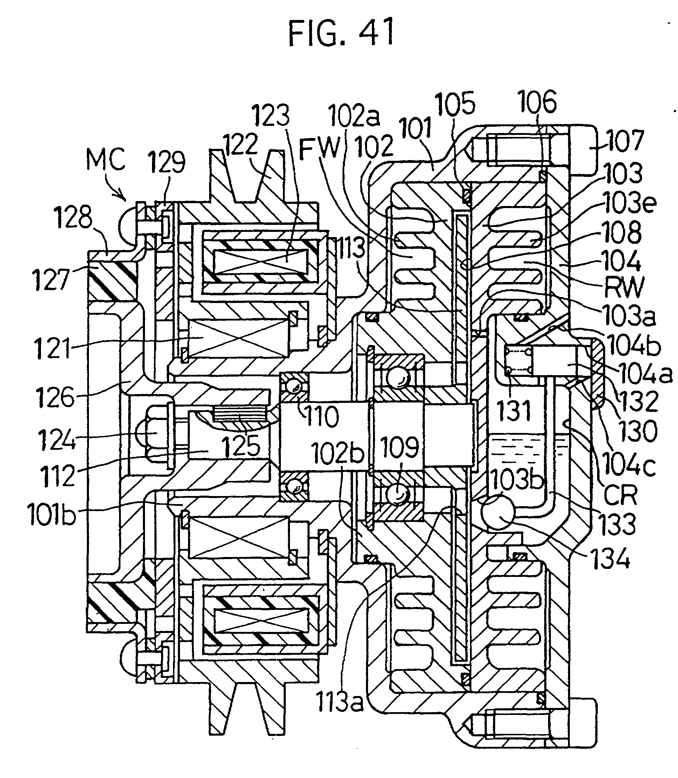

As illustrated in Fig. 41, in the variable capacity type viscous heater, a front plate 102 and a rear plate 103 are superimposed by way of an O-ring 105 disposed therebetween, and are accommodated in a front housing body 101. The front housing body 101 is fastened to a rear housing body 104 by a plurality of through bolts 107 so that it is closed by the rear housing body 104 with an O-ring 106 disposed therebetween.

In a rear-end surface of the front plate 102, a concavity is dented so that it forms a heat-generating chamber 108 together with a flat front-end surface of the rear plate 103. In the rear plate 103, a collector hole 103a and a supply hole 103b are drilled through to a rear-end surface thereof. The collector hole 103a is communicated with an upper central region of the heat-generating chamber 108. The supply hole 103b is communicated with a lower central region of the heat-generating chamber 108. Note that the supply hole 103b is tapered from narrow to wide toward a side of a control chamber CR so that a seating surface is formed.

Further, on an outer peripheral side of the front surface of the front plate 102, a plurality of arc-shaped fins 102a are protruded forwardly. The front plate 102 thus forms a front water jacket FW together with an outer-peripheral-side inner surface of the front housing body 101. Note that the front water jacket FW works as the front radiator chamber which neighbors in front of the heat-generating chamber 108. Whilst, on an outer peripheral side of the rear surface of the rear plate 102 as well, a plurality of arc-shaped fins 103e are protruded rearwardly. The rear plate 103 thus forms a rear water jacket RW together with an outer-peripheral-side inner surface of the rear housing body 104. Note that the rear water jacket FW works as the rear radiator chamber which neighbors in rear of the heat-generating chamber 108. In addition, an inner peripheral side of the rear surface of the rear plate 103 and an inner peripheral side of the inner surface of the rear housing body 104 form a control chamber CR which is communicated with the collector hole 103a and the supply hole 103b. On an outer peripheral surface of the front housing 101, a water inlet port (not shown) and a water outlet port (not shown) are formed next to each other. The water inlet port and the water outlet port are communicated with the front water jacket FW and the rear water jacket RW.

Furthermore, the front plate 102 is provided with a boss 102b. In the boss 102b, a bearing apparatus 109 is disposed which includes a built-in shaft-sealing apparatus. The front housing body 101 is provided with a boss 101b. In the boss 101b, a bearing apparatus 110 is disposed. Accordingly, a driving shaft 112 is held rotatably by these bearing apparatuses 109, 110. An electromagnetic clutch MC is further disposed in the boss 101b of the front housing body 101. In the electromagnetic clutch MC, a pulley 122 is held rotatably to the boss 101b by way of a bearing apparatus 121, and an exciting coil 123 is disposed so as to be positioned in the pulley 122. A hub 126 is fixed to the driving shaft 112 by screwing a bolt 124 into the driving shaft 112 and press-fitting a key 125 thereinto. The hub 125 is further fixed to an armature 129 by way of a rubber member 127 and a flange 128. The pulley 122 is rotated by an engine (not shown) of vehicles by way of a belt.

Moreover, at a rear portion of the driving shaft 112, a flat plate-shaped rotor 113 is press-fitted so that it can rotate in the heat-generating chamber 108. In an inner peripheral region of the rotor 113, a plurality of central apertures 113a are drilled through so that they are communicated with the heat-generating chamber 108 longitudinally. A silicone oil is interposed in the space between the wall surface of the heat-generating chamber 108 and the outer surface of the rotor 113, and in the control chamber CR. Note that the silicone oil works as the viscous fluid.

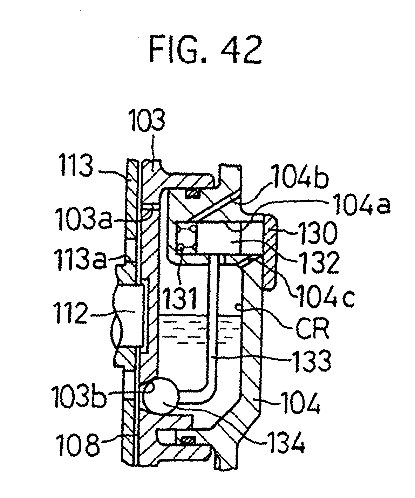

In addition, as best shown in Fig. 42, the rear housing body 104 is provided with a swollen portion which is protruded into the control chamber CR. In the swollen portion, a spool chamber 104a is formed. The spool chamber 104a is closed by a lid member 130. The spool chamber 104a thus closed by the lid member 130 can extend longitudinally. In the spool chamber 104a, a spool 132 is disposed. A compression spring 131 is further interposed between the spool 132 and an opposite end surface of the spool chamber 104a on a side of the heat-generating chamber 108. The spool 132 thus interposed by the compression spring 131 is accommodated in the spool chamber 104a slidably in longitudinal directions. The spool chamber 104a is communicated with the atmosphere on one of the opposite ends on a side of the heat-generating chamber 108 by an atmosphere hole 104b which penetrates through the swollen member. The spool chamber 104 is further communicated with the control chamber CR on another one of the opposite ends by a control hole 104c which penetrates through the swollen member. On a side surface of the spool 132, a rod 133 is fixed. The rod 133 is protruded from the spool chamber 104a so as to extend into the control chamber CR and toward the supply hole 103b. At a leading end of the rod 133, a sphere 134 is fixed so that it can open and close the supply hole 103b. The spool 132, etc., thus constitute the spool valve. Unless otherwise specified, the Comparative Example has the same arrangements as those the First Preferred Embodiment, etc.

In the viscous heater, when a revolving speed of the driving shaft 112 is so low that the heat generation is small, the gaseous pressure is relatively low in the control chamber CR, and the silicone oil is contracted. Accordingly, the pressure, which is introduced into the spool chamber 104a from the control chamber CR by way of the control hole 104c, yields to the summed force, which results from the urging force of the compression spring 131 and the atmospheric pressure introduced through the atmosphere hole 104b. Consequently, the spool 132 retracts so as to get way from the heat-generating chamber 108. As a result, an opening degree of the supply hole 103b is enlarged on a side of the control chamber CR by the sphere 134 by way of the rod 133, and the supply of the silicone oil, held in the control chamber CR, is started, or the supplying amount is increased. All in all, the heat generation is increased in the space between the wall surface of the heat-generating chamber 108 and the outer surface of the rotor 113 (i.e., capacity enlargement), and thereby the heating is intensified.

On the other hand, when a revolving speed of the driving shaft 112 is so high that the heat generation is large, the gaseous pressure is relatively high in the control chamber CR, and the silicone oil is expanded. Accordingly, as illustrated in Fig. 42, the pressure, which is introduced into the spool chamber 104a from the control chamber CR by way of the control hole 104c, overcomes the summed force, which results from the urging force of the compression spring 131 and the atmospheric pressure introduced through the atmosphere hole 104b. Consequently, the spool 132 advances so as to approach the heat-generating chamber 108. As a result, an opening degree of the supply hole 103b is reduced on a side of the control chamber CR by the sphere 134 by way of the rod 133, and the supply of the silicone oil, held in the control chamber CR, is terminated, or the supplying amount is decreased. All in all, the silicone oil, held in the heat-generating chamber 108, is inhibited from elevating the temperature, and is eventually inhibited from deteriorating. In addition, the heat generation can be maintained even after the viscous heater is operated for a long period of time. Unless otherwise specified, the viscous heater of the Comparative Example can operate and produce advantages in the same manner as the First Preferred Embodiment, etc.

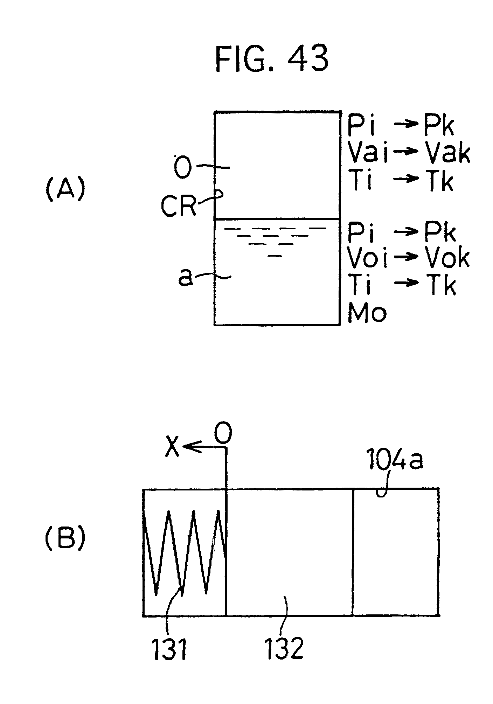

As illustrated in Fig. 43 (A), in operation, the viscous heater of the Comparative Example is in a stationary state where the collected amount of the silicone oil, collected by way of the collector hole 103a, is equal to the supply amount of the silicone oil, supplied by way of the supply hole 103b. Let us assume that a storage amount of the silicone oil in initial operation is equal to a storage amount thereof in operation, the mechanics in the control chamber CR can be investigated and determined schematically as hereinafter designated. Symbols are herein specified as follows: P designates a pressure; V designates a volume; T designates an absolute temperature; M designates a mass; α designates a solubility of air into the silicone oil; ρ designates a density of the silicone oil; and β designates a thermal expansion coefficient of the silicone oil. Subscripts added to the symbols are meant as follows: i designates the initial operation; k designates the operation; a designates "in air"; and o designates "in the silicone oil".

In the initial operation, let us assume that Tᵢ in the air is equal to Tᵢ in the silicone oil. The air is dissolved into the silicone oil in an amount of α Mₒ / ρ ₐᵢ. Accordingly, the total volume of the air in the control chamber CR is:${\text{V = V}}_{\text{ai}} {\text{+ αM}}_{\text{o}} {\text{/ ρ}}_{\text{ai}} \text{.}$

In the operation, let us assume that Tₖ in the air is equal to Tₖ in the silicone oil. The volume of the air is reduced by the expansion of the silicone oil in an amount of Vₒᵢ β (Tₖ - Tᵢ). Consequently, a volume Vₐₖ of the air in the control chamber CR is:${\text{V}}_{\text{ak}} {\text{= V}}_{\text{ai}} {\text{- V}}_{\text{oi}} {\text{β(T}}_{\text{k}} {\text{- T}}_{\text{i}} {\text{) + αM}}_{\text{o}} {\text{/ρ}}_{\text{ak}} \text{.}$

Here, in accordance with the Boyle-Charle's law, the following equation is established:${\text{P}}_{\text{i}} {\text{(V}}_{\text{ai}} {\text{+ αM}}_{\text{o}} {\text{/ρ}}_{\text{ai}} {\text{)/T}}_{\text{i}} {\text{= P}}_{\text{k}} {\text{{V}}_{\text{ai}} {\text{- V}}_{\text{oi}} {\text{β (T}}_{\text{k}} {\text{- T}}_{\text{i}} {\text{) + αM}}_{\text{o}} {\text{/ρ}}_{\text{ak}} {\text{}/T}}_{\text{k}} \text{.}$ As a result, in the operation, a pressure Pₖ in the control chamber CR is:${\text{P}}_{\text{k}} {\text{= T}}_{\text{k}} {\text{P}}_{\text{i}} {\text{{V}}_{\text{ai}} {\text{+ αM}}_{\text{o}} {\text{/ ρ}}_{\text{ai}} {\text{}/T}}_{\text{i}} {\text{{V}}_{\text{ai}} {\text{- V}}_{\text{oi}} {\text{β (T}}_{\text{k}} {\text{- T}}_{\text{i}} {\text{) + αM}}_{\text{o}} {\text{/ ρ}}_{\text{ak}} \text{}.}$ It is understood that, in this equation, Pₖ > Pᵢ because Tₖ > Tᵢ. In other words, when Pᵢ is set virtually equal to the atmospheric pressure, the following relationship is established:
Pₖ in the control chamber CR during low-speed operation
< Pₖ in the control chamber CR during high-speed operation.

In addition, as illustrated in Fig. 43 (B), the mechanics in the spool chamber 104 can be investigated and determined schematically as hereinafter designated. In this investigation, the symbols and subscripts, which are the same as above, are used. In addition, A designates a cross-sectional area of the spool 132, K designates a spring constant of the compression coil spring 131, and x designates a displacement of the spool 132 from 0 at which the spool 132 is not subjected to the urging force of the compression spring 131. Note that, however, Δx = 0 when Pₖ = Pₐ. As a result, a position of the spool 132 can be determined so as to establish the following equation:${\text{P}}_{\text{a}} {\text{A + KΔx = P}}_{\text{k}} \text{A.}$

All in all, it is apparent that, when manufacturing the variable capacity type viscous heater of the Comparative Example, these relationships can be taken into account.

Further, in stead of the bimetal employed in the above-described preferred embodiments, a shape memory alloy, a thermoactuator, or the like, can be employed as the actuating means for the first and second valve means. Note that the actuating means itself can work as the valve means.

Furthermore, the heating can be carried out optimally in accordance with external environments, such as a water temperature in a radiator, a revolving speed of the engine or the viscous heater, and a passenger compartment, when the following arrangement is employed: namely; the rotary valve can be connected to a motor, and the motor can be controlled by an external input so as to open and close the supply passage; or an electromagnetic valve can be employed as the first valve means, the second valve means and/or the third valve means, and the electromagnetic valve can be controlled by an external input so as to open and close the collector passage and/or the supply passage.

Moreover, when the first valve means, the second valve means and/or the third valve means are controlled independently, it is possible to finely carry out the temperature control, because the collector passage, the supply passage and/or the gas passage can be opened and closed by, for instance, independent external inputs.

In addition to the coaxial type screw pump whose driving shaft is coaxial with the driving shaft of the variable capacity type viscous heater of the Third Preferred Embodiment, the variable capacity type viscous heater set forth in Claim 6 or 7 can employ an off-set type screw pump whose driving shaft is off-set to the driving shaft of the viscous heater as the compulsory supplying means. In addition to the screw pumps, the viscous heater can employ a gear pump, a trochoid pump, a centrifugal pump, or the like. When the driving shaft of these pumps are off-set to the driving shaft of the viscous heater, the pumps can be provided with another driving source.

## Claims

1. A Variable capacity type heater set, comprising:
a housing (1, 2, 3, 4) in which a heat-generating chamber (10) and a radiator chamber (FW, RW) are formed, the radiator chamber neighboring the heat-generating chamber, and circulating a circulating fluid therein;
a driving shaft (15) held rotatably to said housing by way of a bearing apparatus (14);
a rotor (16) disposed in said heat-generating chamber rotatably by said driving shaft; and
a viscous fluid interposed in a space between a wall surface of said heat-generating chamber and an outer surface of said rotor, and caused to generate heat by rotation of said rotor;
wherein said housing is provided with a collector passage (3a, 3b) formed therein, communicated with said heat-generating chamber, a supply passage (3c, 3d) formed therein, and communicated with said heat-generating chamber, and a control chamber (CR) formed therein, and communicated with the collector passage and the supply passage;
**characterized in that**
the collector passage (3a, 3b) is capable of opening and closing, whereby capacity reduction is carried out by collecting said viscous fluid, held in said heat generating chamber, by way of the opened collector passage; and whereby capacity enlargement is carried out by supplying said viscous fluid, held in said control chamber, by way of the supply passage.

2. A variable capacity type viscous heater according to claim 1, wherein the supply passage (3c, 3d) is capable of opening and closing.

3. A variable capacity type viscous heater according to Claim I or 2, wherein said collector passage is communicated with a central region of said heat-generating chamber, and the capacity reduction is at least carried out by the Weissenberg effect which results from said viscous fluid transferred by way of said collector passage.

4. A variable capacity type viscous heater according to Claim 1, or 3, wherein said collector passage has a control-chamber-side opening which is disposed on an upper side with respect to a liquid level of said viscous fluid, held in said control chamber (CR), and that said supply passage thereof has a control-chamber-side opening which is disposed on a lower side with respect to the liquid level of said viscous fluid, held in said control chamber (CR).

5. A variable capacity type viscous heater according to any of Claims 1, to 4, wherein said supply passage has a larger communication area than that of said collector passage.

6. A variable capacity type viscous heater according to any of Claims 1, to 4, wherein said supply passage (21c) is provided with compulsory supplying means (15a) for compulsorily supplying said viscous fluid, held in said control chamber, into said heat-generating chamber.

7. A variable capacity type viscous heater according to Claim 6, wherein said compulsory supplying means (15a) is a pump which is disposed so as to be rotatable synchronously with said driving shaft (15), and in which a vortex groove (15a) is formed.

8. A variable capacity type viscous heater according to any of Claims 1 to 7, wherein at least a forward-side peripheral portion, with respect to the rotary direction of said rotor (16), in said heat-generating-chamber-side opening (30d) of said collector passage (30c) is subjected to chamfering.

9. A variable capacity type viscous heater according to Claim 8, wherein said heat-generating-chamber-side opening (30d) of said collector passage (30c) is formed as an arc shape which has a larger curvature at a forward-side peripheral portion thereof, with respect to the rotary direction of said rotor (16), than at a rear-side peripheral portion thereof, or it is formed linearly.

10. A variable capacity type viscous heater according to any of the preceeding Claims wherein said supply passage has a distributor passage (3c; 30f; 30; 30l; 31e), which extends toward an outer periphery of said rotor (16), in said heat-generating chamber.

11. A variable capacity type viscous heater according to Claim 10, wherein said distributor passage is a supply groove (30f) which is dented in said housing (30) so as to be opened on a heat-generating-chamber side thereof, and which is inclined with respect to a diametric direction of said rotor (16) on a forward side with respect to the rotary direction of said rotor (16).

12. A variable capacity type viscous heater according to Claim 10, wherein said distributor passage is a supply groove (30l) which is dented in said housing (30) so as to be opened on a heat-generating-chamber side thereof, and which is curved with respect to a diametric direction of said rotor (16) on a forward side with respect to the rotary direction of said rotor (16).

13. A variable capacity type viscous heater according to any of Claims 10 to 12, wherein said distributor passage is subjected to chamfering (30g, 30m) at least at a forward-side peripheral portion with respect to the rotary direction of said rotor (16).

14. A variable capacity type viscous heater according to any of the preceeding Claims wherein said collector passage is provided with first valve means (19; 22; 32; 61; 86a; 90a, 34) which opens and closes said collector passage.

15. A variable capacity type viscous heater according to Claim 14, wherein said first valve means is a flap valve (34) which is disposed in said control chamber (CR), and which deforms to open or close a control-chamber-side opening of said collector passage.

16. A variable capacity type viscous heater according to Claim 15, wherein said flap valve (34) is a reed type one which opens said control-chamber-side opening of said collector passage by pressure increment in said heat-generating chamber.

17. A variable capacity type viscous heater according to Claim 15, wherein said flap valve (34) is a bimetal type one which opens said control-chamber-side opening of said collector passage by temperature increment in said viscous fluid.

18. A variable capacity type viscous heater according to Claim 14, wherein said first valve means is a rotary valve (19; 22; 32; 61) which is disposed in said control chamber, and which rotates to open or close a control-chamber-side opening of said collector passage.

19. A variable capacity type viscous heater according to Claim 18, wherein said control chamber (CR) is provided with a bimetal spiral spring (18; 58) disposed therein, and that said rotary valve (19; 22; 32; 61) is rotated by displacement of the bimetal spiral spring (18; 58) which depends on temperature variation of said viscous fluid held in said control chamber.

20. A variable capacity type viscous heater according to Claim 14, wherein said first valve means is an adjusting valve (86a; 90a) which is disposed in said control chamber (CR) and which opens or closes a control-chamber-side opening of said collector passage in accordance with revolving speed of said driving shaft (82).

21. A variable capacity type viscous heater according to Claim 20, wherein said adjusting valve (86a; 90a) is disposed rotatably and integrally with said driving shaft (82), and is displaced by centrifugal force resulting from the rotation of said driving shaft (82).

22. A variable capacity type viscous heater according to any of Claims 2, to 21, wherein said supply passage is provided with second valve means (19; 22; 32; 35; 61; 86b; 90b; 132) which opens and closes said supply passage.

23. A variable capacity type viscous heater according to Claim 22, wherein said second valve means is a flap valve (35) which is disposed in said control chamber, and which deforms to open or close a control-chamber-side opening of said supply passage.

24. A variable capacity type viscous heater according to Claim 23, wherein said flap valve (35) is a bimetal type one which opens said control-chamber-side opening of said supply passage by temperature decrement in said viscous fluid.

25. A variable capacity type viscous heater according to Claim 22, wherein said second valve means is a rotary valve (19; 22; 32; 61) which is disposed in said control chamber, and which rotates to open or close a control-chamber-side opening of said supply passage.

26. A variable capacity type viscous heater according to Claim 25, wherein said control chamber is provided with a bimetal spiral spring (18; 58) disposed therein, and said rotary valve (19; 22; 32; 61) is rotated by displacement of the bimetal spiral spring (18; 58) which depends on temperature variation of said viscous fluid held in said control chamber.

27. A variable capacity type viscous heater according to Claim 22, wherein said second valve means is an adjusting valve (86b; 90b) which is disposed in said control chamber, and which opens or closes a control-chamber-side opening of said supply passage in accordance with revolving speed of said driving shaft (82).

28. A variable capacity type viscous heater according to Claim 27, wherein said adjusting valve (86b; 90b) is disposed rotatably and integrally with said driving shaft (82) and is displaced by centrifugal force resulting from the rotation of said driving shaft (82).

29. A variable capacity type viscous heater according to Claim 22, wherein said second valve means is a spool valve (132) which opens or closes a control-chamber-side opening of said supply passage by opposition between pressure in said control chamber and atmospheric pressure.

30. A variable capacity type viscous heater according to any of the preceeding Claims, wherein the opening and closing said supply passage and collector passage are provided with a timing where said collector passage is opened when said supply passage is opened.

31. A variable capacity type viscous heater according to Claim 30, wherein said first and second valve means are a rotary valve (32) which is disposed in said control chamber, and which rotates to open or close said control-chamber-side openings of said collector passage and supply passage, and the rotary valve (32) opens or closes said control-chamber-side openings of said collector passage and supply passage by means of a single arc-shaped through hole (32a).

32. A variable capacity type viscous heater according to any of the preceeding Claims, wherein said housing (3; 30; 31) is provided with a gas passage (3e, 3f; 30a, 30b; 31a, 31b, 32b) which communicates an upper side of said heat-generating chamber with an upper side of said control chamber.

33. A variable capacity type viscous heater according to Claim 32, wherein said gas passage (31a, 31b, 32b) is capable of opening and closing.

34. A variable capacity type viscous heater according-to Claim 32, wherein said gas passage (31a, 31b, 32b) is provided with a third valve means (32) which opens and closes said gas passage.

35. A variable capacity type viscous heater according to Claim 34, wherein said third valve means is a rotary valve (32) which is disposed in said control chamber, and which rotates to open or close a control-chamber-side opening of said gas passage (31a, 31b, 32b).

36. A variable capacity type viscous heater according to Claim 35, wherein said control chamber is provided with a bimetal spiral spring (18) disposed therein, and said rotary valve (32) is rotated by displacement of the bimetal spiral spring (18) which depends on temperature variation of said viscous fluid held in said control chamber.

37. A variable capacity type viscous heater according to Claim 18, 19, 25, 26, 31 or 35, wherein said rotary valve (19; 22; 32; 61) is formed as a plate shape.

38. A variable capacity type viscous heater according to Claim 37, wherein said rotary valve (19; 22; 32; 61) is pressed by urging means in a direction so as to close at least one of said control-chamber-side openings of said collector passage, said supply passage and said gas passage.

39. A variable capacity type viscous heater according to any of Claims 1, to 38, wherein said rotor (16; 83; 113) is formed as a flat plate shape.

40. A variable capacity type viscous heater according to any of Claims 1, to 39, wherein said rotor (16; 83; 113) is provided with a central aperture (16a; 83a; 113a) which is drilled through in a central region of said rotor (16; 83; 113).

## Patentansprüche

1. Dickstoffheizer mit veränderlichem Fördervolumen, der aufweist:
- ein Gehäuse (1, 2, 3, 4), in welchem eine Wärmeerzeugungskammer (10) und eine Radiatorkammer (FW, RW) ausgebildet sind, wobei die Radiatorkammer der Wärmeerzeugungskammer benachbart ist und eine Umlaufflüssigkeit darin zirkuliert,
- eine Antriebswelle (15), die in dem Gehäuse durch eine Lagervorrichtung (14) drehbar gelagert ist,
- einen Rotor (16), der in der Wärmeerzeugungskammer durch die Antriebswelle in Drehung versetzt ist, und
- eine viskose Flüssigkeit, die in einen Raum zwischen einer Wandfläche der Wärmeerzeugungskammer und einer Außenfläche des Rotors eingebracht ist, in welcher durch die Drehung des Rotors Wärme erzeugt wird,
wobei das Gehäuse mit einem darin ausgebildeten Sammlerkanal (3a, 3b) versehen ist, der mit der Wärmeerzeugungskammer verbunden ist, einem darin erzeugten und mit der Wärmeerzeugungskammer verbundenen Zuführkanal (3c, 3d) und einer darin erzeugten und mit dem Sammlerkanal und dem Zuführkanal verbundenen Steuerkammer (CR),
**dadurch gekennzeichnet, daß**:
der Sammlerkanal (3a, 3b) geöffnet und geschlossen werden kann, wodurch die Fördervolumenverringerung ausgeführt wird, indem die viskose Flüssigkeit, die in der Wärmeerzeugungskammer vorgehalten ist, über den geöffneten Sammlerkanal gesammelt wird, und wobei die Fördervolumenvergrößerung durch Zuführen der viskosen Flüssigkeit, die in der Steuerkammer vorgehalten ist, über den Zuführkanal ausgeführt wird.

2. Dickstoffheizer mit veränderlichem Fördervolumen gemäß Anspruch 1, wobei der Zuführkanal (3c, 3d) geöffnet und geschlossen werden kann.

3. Dickstoffheizer mit veränderlichem Fördervolumen gemäß Anspruch 1 oder 2, wobei der Sammlerkanal mit einem mittleren Bereich der Wärmeerzeugungskammer verbunden ist und die Fördervolumenverringerung zumindest durch den Weissenberg-Effekt ausgeführt wird, welcher aus dem Transport der viskosen Flüssigkeit über den Sammlerkanal resultiert.

4. Dickstoffheizer mit veränderlichem Fördervolumen gemäß Anspruch 1, 2 oder 3, wobei der Sammlerkanal eine steuerkammerseitige Öffnung aufweist, welche auf einer oberen Seite in bezug auf ein Flüssigkeitsniveau der viskosen Flüssigkeit angeordnet ist, die in der Steuerkammer (CR) vorgehalten ist, und dieser Zuführkanal eine steuerkammerseitige Öffnung aufweist, welche auf einer unteren Seite in bezug auf das Flüssigkeitsniveau der viskosen Flüssigkeit angeordnet ist, die in der Steuerkammer (CR) vorgehalten ist.

5. Dickstoffheizer mit veränderlichem Fördervolumen gemäß einem der Ansprüche 1 bis 4, wobei der Zuführkanal einen größeren Verbindungsquerschnitt als der Sammlerkanal aufweist.

6. Dickstoffheizer mit veränderlichem Fördervolumen gemäß einem der Ansprüche 1 bis 4, wobei der Zuführkanal (21c) mit einer Zwangszuführvorrichtung (15a) versehen ist, welche die viskose Flüssigkeit, die in der Steuerkammer vorgehalten ist, in die Wärmeerzeugungskammer zwangsweise zuführt.

7. Dickstoffheizer mit veränderlichem Fördervolumen gemäß Anspruch 6, wobei die Zwangszuführvorrichtung (15a) eine Pumpe ist, welche angeordnet ist, um im Gleichlauf mit der Antriebswelle (15) gedreht zu werden, und in welcher eine Spiralnut (15a) erzeugt ist.

8. Dickstoffheizer mit veränderlichem Fördervolumen gemäß einem der Ansprüche 1 bis 7, wobei an mindestens einem Vorderseiten-Umfangsabschnitt in bezug auf die Drehrichtung des Rotors (16) in der wärmeerzeugungskammerseitigen Öffnung (30d) des Sammlerkanals (30c) eine Abschrägung vorgenommen ist.

9. Dickstoffheizer mit veränderlichem Fördervolumen gemäß Anspruch 8, wobei die wärmeerzeugungskammerseitige Öffnung (30d) des Sammlerkanals (30c) bogenförmig mit einer größeren Krümmung an einem Vorderseiten-Umfangsabschnitt in bezug auf die Drehrichtung des Rotors (16) als an einem Hinterseiten-Umfangsabschnitt erzeugt ist oder geradlinig ausgebildet ist.

10. Dickstoffheizer mit veränderlichem Fördervolumen gemäß einem der vorhergehenden Ansprüche, wobei der Zuführkanal einen Verteilerkanal (3c, 30f, 30, 301, 31e) aufweist, welcher sich zu einem Außenumfang des Rotors (16) in der Wärmeerzeugungskammer erstreckt.

11. Dickstoffheizer mit veränderlichem Fördervolumen gemäß Anspruch 10, wobei der Verteilerkanal eine Zuführnut (30f) ist, welche in dem Gehäuse (30) vertieft ist, um auf einer Wärmeerzeugungskammerseite offen zu sein, und welche in bezug auf eine diametrale Richtung des Rotors (16) auf einer Vorderseite in bezug auf die Drehrichtung des Rotors (16) geneigt ist.

12. Dickstoffheizer mit veränderlichem Fördervolumen gemäß Anspruch 10, wobei der Verteilerkanal eine Zuführnut (301) ist, welche in dem Gehäuse (30) vertieft ist, um auf einer Wärmeerzeugungskammerseite offen zu sein, und welche in bezug auf eine diametrale Richtung des Rotors (16) auf einer Vorderseite in bezug auf die Drehrichtung des Rotors (16) gekrümmt ist.

13. Dickstoffheizer mit veränderlichem Fördervolumen gemäß einem der Ansprüche 10 bis 12, wobei der Verteilerkanal mindestens in einem Vorderseiten-Umfangsabschnitt in bezug auf die Drehrichtung des Rotors (16) mit einer Abschrägung (30g, 30m) versehen ist.

14. Dickstoffheizer mit veränderlichem Fördervolumen gemäß einem der vorhergehenden Ansprüche, wobei der Sammlerkanal mit einer ersten Ventilvorrichtung (19; 22; 32; 61; 86a; 90a; 34) versehen ist, welche den Sammlerkanal öffnet und schließt.

15. Dickstoffheizer mit veränderlichem Fördervolumen gemäß Anspruch 14, wobei die erste Ventilvorrichtung ein Klappenventil (34) ist, welches in der Steuerkammer (CR) angeordnet ist und sich verformt, um eine steuerkammerseitige Öffnung des Sammlerkanals zu öffnen oder zu schließen.

16. Dickstoffheizer mit veränderlichem Fördervolumen gemäß Anspruch 15, wobei das Klappenventil (34) eine Ventilplättchentype ist, welches die steuerkammerseitige Öffnung des Sammlerkanals bei Druckanstieg in der Wärmeerzeugungskammer öffnet.

17. Dickstoffheizer mit veränderlichem Fördervolumen gemäß Anspruch 15, wobei das Klappenventil (34) eine Bimetalltype ist, welches die steuerkammerseitige Öffnung des Sammlerkanals bei Temperaturanstieg in der viskosen Flüssigkeit öffnet.

18. Dickstoffheizer mit veränderlichem Fördervolumen gemäß Anspruch 14, wobei die erste Ventilvorrichtung ein Drehschieber (19; 22; 32; 61) ist, welcher in der Steuerkammer angeordnet ist, und der sich dreht, um eine steuerkammerseitige Öffnung des Sammlerkanals zu öffnen oder zu schließen.

19. Dickstoffheizer mit veränderlichem Fördervolumen gemäß Anspruch 18, wobei die Steuerkammer (CR) mit einer Bimetall-Spiralfeder (18; 58) versehen ist, die darin angeordnet ist, und der Drehschieber (19; 22; 32; 61) bei Verlagerung der Bimetall-Spiralfeder (18; 58) gedreht wird, welche von der Temperaturänderung der viskosen Flüssigkeit abhängt, die in der Steuerkammer vorgehalten ist.

20. Dickstoffheizer mit veränderlichem Fördervolumen gemäß Anspruch 14, wobei die erste Ventilvorrichtung ein Einstellventil (86a; 90a) ist, welches in der Steuerkammer (CR) angeordnet ist, und welches eine steuerkammerseitige Öffnung des Sammlerkanals gemäß der Drehzahl der Antriebswelle (82) öffnet oder schließt.

21. Dickstoffheizer mit veränderlichem Fördervolumen gemäß Anspruch 20, wobei das Einstellventil (86a; 90a) drehbar angeordnet ist und mit der Antriebswelle (82) einstückig ist und durch die bei der Drehung der Antriebswelle (82) resultierende Zentrifugalkraft verlagert wird.

22. Dickstoffheizer mit veränderlichem Fördervolumen gemäß einem der Ansprüche 2 bis 21, wobei der Zuführkanal mit einer zweiten Ventilvorrichtung (19; 22; 32; 35; 61; 86b; 90b; 132) versehen ist, welche den Zuführkanal öffnet und schließt.

23. Dickstoffheizer mit veränderlichem Fördervolumen gemäß Anspruch 22, wobei die zweite Ventilvorrichtung ein Klappenventil (35) ist, welches in der Steuerkammer angeordnet ist, und welches sich verformt, um eine steuerkammerseitige Öffnung des Zuführkanals zu öffnen oder zu schließen.

24. Dickstoffheizer mit veränderlichem Fördervolumen gemäß Anspruch 23, wobei das Klappenventil eine Bimetalltype ist, welches die steuerkammerseitige Öffnung des Zuführkanals bei Temperaturrückgang in der viskosen Flüssigkeit öffnet.

25. Dickstoffheizer mit veränderlichem Fördervolumen gemäß Anspruch 22, wobei die zweite Ventilvorrichtung ein Drehschieber (19; 22; 32; 61) ist, welcher in der Steuerkammer angeordnet ist, und welcher sich dreht, um eine steuerkammerseitige Öffnung des Zuführkanals zu öffnen oder zu schließen.

26. Dickstoffheizer mit veränderlichem Fördervolumen gemäß Anspruch 25, wobei die Steuerkammer mit einer Bimetall-Spiralfeder (18; 58) versehen ist, die darin angeordnet ist, und der Drehschieber (19; 22; 32; 61) bei Verlagerung der Bimetall-Spiralfeder (18; 58) gedreht wird, welche von der Temperaturänderung der in der Steuerkammer vorgehaltenen viskosen Flüssigkeit abhängt.

27. Dickstoffheizer mit veränderlichem Fördervolumen gemäß Anspruch 22, wobei die zweite Ventilvorrichtung ein Einstellventil (86b; 90b) ist, welches in der Steuerkammer angeordnet ist, und welches eine steuerkammerseitige Öffnung des Zuführkanals gemäß der Drehzahl der Antriebswelle (82) öffnet oder schließt.

28. Dickstoffheizer mit veränderlichem Fördervolumen gemäß Anspruch 27, wobei das Einstellventil (86b; 90b) drehbar angeordnet ist und mit der Antriebswelle (82) einstückig ist und durch die aus der Drehung der Antriebswelle (82) resultierende Zentrifugalkraft verlagert wird.

29. Dickstoffheizer mit veränderlichem Fördervolumen gemäß Anspruch 22, wobei die zweite Ventilvorrichtung ein Schieberventil (132) ist, welches eine steuerkammerseitige Öffnung des Zuführkanals bei Gegenwirkung zwischen dem Druck in der Steuerkammer und dem atmosphärischen Druck öffnet oder schließt.

30. Dickstoffheizer mit veränderlichem Fördervolumen gemäß einem der vorhergehenden Ansprüche, wobei das Öffnen und das Schließen des Zuführkanals und des Sammlerkanals mit einer Zeitsteuerung vorgenommen wird, in welcher der Sammlerkanal geöffnet wird, wenn der Zuführkanal geöffnet wird.

31. Dickstoffheizer mit veränderlichem Fördervolumen gemäß Anspruch 30, wobei die erste und die zweite Ventilvorrichtung ein Drehschieber (32) ist, welcher in der Steuerkammer angeordnet ist, und der sich dreht, um die steuerkammerseitigen Öffnungen des Sammlerkanals und des Zuführkanals zu öffnen oder zu schließen, und der Drehschieber (32) die steuerkammerseitigen Öffnungen des Sammlerkanals und des Zuführkanals mittels eines einzelnen, bogenförmigen Durchgangslochs (32a) öffnet oder schließt.

32. Dickstoffheizer mit veränderlichem Fördervolumen gemäß einem der vorhergehenden Ansprüche, wobei das Gehäuse (3; 30; 31) mit einem Gaskanal (3e, 3f; 30a, 30b; 31a, 31b, 32b) versehen ist, welcher eine Oberseite der Wärmeerzeugungskammer mit einer Oberseite der Steuerkammer verbindet.

33. Dickstoffheizer mit veränderlichem Fördervolumen gemäß Anspruch 32, wobei der Gaskanal (31a, 31b, 32b) geöffnet und geschlossen werden kann.

34. Dickstoffheizer mit veränderlichem Fördervolumen gemäß Anspruch 32, wobei der Gaskanal (31a, 31b, 32b) mit einer dritten Ventilvorrichtung (32) versehen ist, welche den Gaskanal öffnet und schließt.

35. Dickstoffheizer mit veränderlichem Fördervolumen gemäß Anspruch 32, wobei die dritte Ventilvorrichtung ein Drehschieber (32) ist, welcher in der Steuerkammer angeordnet ist, und der sich dreht, um eine steuerkammerseitige Öffnung des Gaskanals (31a, 31b, 32b) zu öffnen oder zu schließen.

36. Dickstoffheizer mit veränderlichem Fördervolumen gemäß Anspruch 35, wobei die Steuerkammer mit einer Bimetall-Spiralfeder (18) versehen ist, die darin angeordnet ist, und der Drehschieber (32) bei Verlagerung der Bimetall-Spiralfeder (18) gedreht wird, welche von der Temperaturänderung der in der Steuerkammer vorgehaltenen viskosen Flüssigkeit abhängt.

37. Dickstoffheizer mit veränderlichem Fördervolumen gemäß Anspruch 18, 19, 25, 26, 31 oder 35, wobei der Drehschieber (19; 22; 32; 61) plattenförmig ausgebildet ist.

38. Dickstoffheizer mit veränderlichem Fördervolumen gemäß Anspruch 37, wobei der Drehschieber (19; 22; 32; 61) durch eine Drängvorrichtung in eine Richtung gedrückt wird, um mindestens eine der steuerkammerseitigen Öffnungen des Sammlerkanals, des Zuführkanals und des Gaskanals zu schließen.

39. Dickstoffheizer mit veränderlichem Fördervolumen gemäß einem der Ansprüche 1 bis 38, wobei der Rotor (16; 83; 113) mit einer flachen Plattenform ausgebildet ist.

40. Dickstoffheizer mit veränderlichem Fördervolumen gemäß einem der Ansprüche 1 bis 39, wobei der Rotor (16; 83; 113) mit einer mittleren Öffnung (16a; 83a; 113a) versehen ist, welche in einem mittleren Bereich des Rotors (16; 83; 113) durchgängig gebohrt ist.

## Revendications

1. Ensemble radiateur du type à capacité variable, comprenant : un logement (1, 2, 3, 4) dans lequel une chambre génératrice de chaleur (10) et une chambre de radiateur (FW, RW) sont formées, la chambre de radiateur avoisinant la chambre génératrice de chaleur, et assurant la circulation d'un liquide qui y circule à l'intérieur ;
un arbre d'entraînement (15) retenu en rotation sur ledit logement au moyen d'un appareil de support (14) ;
un rotor (16) disposé en rotation dans ladite chambre génératrice de chaleur par ledit arbre d'entraînement ; et
un liquide visqueux interposé dans un espace entre une surface de paroi de ladite chambre génératrice de chaleur et une surface extérieure dudit rotor, et amené à produire de la chaleur par la rotation dudit rotor ;
où ledit logement est muni d'un passage collecteur (3a, 3b) qui y est formé, et qui communique avec ladite chambre génératrice de chaleur, d'un passage d'alimentation (3c, 3d) qui y est formé, et qui communique avec ladite chambre génératrice de chaleur, et d'une chambre de commande (CR) qui y est formée, et qui communique avec le passage collecteur et le passage d'alimentation ;
**caractérisé en ce que**
le passage collecteur (3a, 3b) est capable d'ouverture et de fermeture, à l'occasion de quoi la réduction de capacité est effectuée en collectant ledit liquide visqueux, retenu dans ladite chambre génératrice de chaleur, au moyen du passage collecteur ouvert ; et à l'occasion de quoi l'augmentation de capacité est effectuée en fournissant ledit liquide visqueux, retenu dans la chambre de commande, au moyen du passage d'alimentation.

2. Radiateur visqueux du type à capacité variable selon la revendication 1, où le passage d'alimentation (3c, 3d) est capable d'ouverture et de fermeture,

3. Radiateur visqueux du type à capacité variable selon la revendication 1 ou 2, où ledit passage collecteur communique avec une région centrale de ladite chambre génératrice de chaleur, et où la réduction de capacité est au moins effectuée par l'effet Weissenberg qui résulte du transfert du liquide visqueux au moyen dudit passage collecteur.

4. Radiateur visqueux du type à capacité variable selon la revendication 1, 2 ou 3, où ledit passage collecteur a une ouverture côté chambre de commande qui est disposée sur un côté supérieur par rapport à un niveau de liquide dudit liquide visqueux, retenu dans ladite chambre de commande (CR), et où son dit passage d'alimentation a une ouverture côté chambre de commande qui est disposée sur un côté inférieur par rapport au niveau de liquide dudit liquide visqueux, retenu dans la chambre de commande (CR).

5. Radiateur visqueux du type à capacité variable selon l'une quelconque des revendications 1 à 4, où ledit passage d'alimentation a une aire de communication plus grande que celle dudit passage collecteur.

6. Radiateur visqueux du type à capacité variable selon l'une quelconque des revendications 1 à 4, où ledit passage d'alimentation (21c) est muni de moyens d'alimentation forcée (15a) pour fournir de façon forcée ledit liquide visqueux, retenu dans la chambre de commande, vers l'intérieur de ladite chambre génératrice de chaleur.

7. Radiateur visqueux du type à capacité variable selon la revendication 6, où lesdits moyens d'alimentation forcée (15a) sont une pompe qui est disposée de façon à pouvoir être mise en rotation synchrone avec ledit arbre d'entraînement (15) et dans laquelle est formée une rainure génératrice de tourbillons (15a).

8. Radiateur visqueux du type à capacité variable selon l'une quelconque des revendications 1 à 7, où au moins une portion périphérique côté avant, par rapport au sens de rotation dudit rotor (16) dans ladite ouverture (30d). côté chambre génératrice de chaleur, dudit passage collecteur (30c), est soumise au biseautage.

9. Radiateur visqueux du type à capacité variable selon la revendication 8, où ladite ouverture (30d), côté chambre génératrice de chaleur, dudit passage collecteur (30c) a une forme d'arc qui a une courbure plus importante, à sa portion périphérique côté avant par rapport au sens de rotation dudit rotor (16), qu'à sa portion périphérique côté arrière, ou bien elle a une forme linéaire.

10. Radiateur visqueux du type à capacité variable selon l'une quelconque des précédentes revendications, où ledit passage d'alimentation a un passage distributeur (3c ; 30f ; 30 ; 30 l ; 31e) qui s'étend vers une périphérie extérieure dudit rotor (16) dans ladite chambre génératrice de chaleur.

11. Radiateur visqueux du type à capacité variable selon la revendication 10, où ledit passage distributeur est une rainure d'alimentation (30f) qui est creusée dans ledit logement (30) de façon à être ouverte sur son côté chambre génératrice de chaleur, et qui est inclinée par rapport à une direction diamétrale dudit rotor (16) sur un coté avant par rapport au sens de rotation dudit rotor (16).

12. Radiateur visqueux du type à capacité variable selon la revendication 10, où ledit passage distributeur est une rainure d'alimentation (301) qui est creusée dans ledit logement (30) de façon à être ouverte sur son côté chambre génératrice de chaleur, et qui est incurvée par rapport à une direction diamétrale dudit rotor (16) sur un coté avant par rapport au sens de rotation dudit rotor (16).

13. Radiateur visqueux du type à capacité variable selon l'une quelconque des revendications 10 à 12, où ledit passage distributeur est soumis au biseautage (30g, 30m) au moins sur une portion périphérique côté avant par rapport au sens de rotation dudit rotor (16).

14. Radiateur visqueux du type à capacité variable selon l'une quelconque des revendications précédentes, où ledit passage collecteur est muni de premiers moyens de soupape (19 ; 22 ; 32 ; 61 ; 86a ; 90a ; 34) qui ouvrent et ferment ledit passage collecteur.

15. Radiateur visqueux du type à capacité variable selon la revendication 14, où lesdits premiers moyens de soupape sont une soupape à clapet (34) qui est disposée dans ladite chambre de commande (CR) et qui se déforme pour ouvrir ou fermer une ouverture côté chambre de commande dudit passage collecteur.

16. Radiateur visqueux du type à capacité variable selon la revendication 15, où ladite soupape à clapet (34) est de type flexible et ouvre ladite ouverture côté chambre de commande dudit passage collecteur par augmentation de pression dans ladite chambre génératrice de chaleur.

17. Radiateur visqueux du type à capacité variable selon la revendication 15, où ladite soupape à clapet (34) est du type bimétallique qui ouvre ladite ouverture côté chambre de commande dudit passage collecteur par augmentation de température dans ledit liquide visqueux.

18. Radiateur visqueux du type à capacité variable selon la revendication 14, où lesdits premiers moyens de soupape sont une soupape rotative (19 ; 22 ; 32 ; 61) qui est disposée dans ladite chambre de commande, et qui tourne pour ouvrir ou fermer une ouverture côté chambre de commande dudit passage collecteur.

19. Radiateur visqueux du type à capacité variable selon la revendication 18. où ladite chambre de commande (CR) est munie d'un ressort spiral bimétallique (18 ; 58) qui y est disposé, et ladite soupape rotative (19 ; 22 ; 32 ; 61) est mise en rotation par un déplacement du ressort spiral bimétallique (18 ; 58) qui dépend de la variation de température dudit liquide visqueux retenu dans ladite chambre de commande.

20. Radiateur visqueux du type à capacité variable selon la revendication 14, où lesdits premiers moyens de soupape sont une soupape de réglage (86a ; 90a) qui est disposée dans ladite chambre de commande (CR) et qui ouvre ou ferme une ouverture côté chambre de commande dudit passage collecteur selon la vitesse de rotation dudit arbre d'entraînement (82).

21. Radiateur visqueux du type à capacité variable selon la revendication 20, où ladite soupape de réglage (86a ; 90a) est disposée en rotation et d'un seul tenant avec ledit arbre d'entraînement (82) et est déplacée par une force centrifuge résultant de la rotation dudit arbre d'entraînement (82).

22. Radiateur visqueux du type à capacité variable selon l'une quelconque des revendications 2 à 21, où ledit passage d'alimentation est muni de deuxièmes moyens de soupape (19 ; 22 ; 32 ; 35 ; 61 ; 86b ; 90b ; 132) qui ouvrent et ferment ledit passage d'alimentation.

23. Radiateur visqueux du type à capacité variable selon la revendication 22, où lesdits deuxièmes moyens de soupape sont une soupape à clapet (35) qui est disposée dans ladite chambre de commande, et qui se déforme pour ouvrir ou fermer une ouverture côté chambre de commande dudit passage d'alimentation.

24. Radiateur visqueux du type à capacité variable selon la revendication 23, où ladite soupape à clapet (35) est une soupape de type bimétallique qui ouvre ladite ouverture côté chambre de commande dudit passage d'alimentation par diminution de la température dans ledit liquide visqueux.

25. Radiateur visqueux du type à capacité variable selon la revendication 22, où lesdits deuxièmes moyens de soupape sont une soupape rotative (19 ; 22 ; 32 ; 61) qui est disposée dans ladite chambre de commande, et qui tourne pour ouvrir ou ouvrir une ouverture côté chambre de commande dudit passage d'alimentation.

26. Radiateur visqueux du type à capacité variable selon la revendication 25, où ladite chambre de commande est munie d'un ressort spiral bimétailique(18 ; 58) qui y est disposé, et ladite soupape rotative (19 ; 22 ; 32 ; 61) est mise en rotation par un déplacement du ressort spiral bimétallique (18 ; 58) qui dépend de la variation de température dudit liquide visqueux retenu dans ladite chambre de commande.

27. Radiateur visqueux du type à capacité variable selon la revendication 22, où lesdits deuxièmes moyens de soupape sont une soupape de réglage (86b ; 90b) qui est disposée dans ladite chambre de commande et qui ouvre ou ferme une ouverture côté chambre de commande dudit passage d'alimentation selon la vitesse de rotation dudit arbre d'entraînement (82).

28. Radiateur visqueux du type à capacité variable selon la revendication 27, où ladite soupape de réglage (86b ; 90b) est disposée en rotation et d'un seul tenant avec ledit arbre d'entraînement (82) et est déplacée par une force centrifuge résultant de la rotation dudit arbre d'entraînement (82).

29. Radiateur visqueux du type à capacité variable selon la revendication 22, où lesdits deuxièmes moyens de soupape sont une soupape-tiroir (132) qui ouvre ou ferme une ouverture côté chambre de commande dudit passage d'alimentation par l'opposition entre la pression dans ladite chambre de commande et la pression atmosphérique.

30. Radiateur visqueux du type à capacité variable selon l'une quelconque des revendications précédentes, où l'ouverture et la fermeture dudit passage d'alimentation et dudit passage collecteur sont munies d'une synchronisation où ledit passage collecteur est ouvert quand le passage d'alimentation est ouvert.

31. Radiateur visqueux du type à capacité variable selon la revendication 30, où lesdits premiers et deuxièmes moyens de soupape sont une soupape rotative (32) qui est disposée dans ladite chambre de commande, et qui tourne pour ouvrir ou fermer lesdites ouvertures côté chambre de commande dudit passage collecteur et dudit passage d'alimentation, et où la soupape rotative (32) ouvre ou ferme lesdites ouvertures côté chambre de commande dudit passage collecteur et dudit passage d'alimentation au moyen d'un unique trou débouchant (32a) en forme d'arc.

32. Radiateur visqueux du type à capacité variable selon l'une quelconque des revendications précédentes, où ledit logement (3 ; 30 ; 31) est muni d'un passage de gaz (3c ; 3f ; 30a ; 30b ; 31a ; 31b ; 32b) qui met en communication un côté supérieur de ladite chambre génératrice de chaleur avec un côté supérieur de ladite chambre de commande.

33. Radiateur visqueux du type à capacité variable selon la revendication 32, où ledit passage de gaz (31a ; 31b ; 32b) est capable d'ouverture et de fermeture.

34. Radiateur visqueux du type à capacité variable selon la revendication 32, où ledit passage de gaz (31a ; 31b ; 32b) est muni de troisièmes moyens de soupape (32) qui ouvrent et ferment ledit passage de gaz.

35. Radiateur visqueux du type à capacité variable selon la revendication 34, où lesdits troisièmes moyens de soupape sont une soupape rotative (32) qui est disposée dans ladite chambre de commande, et qui tourne pour ouvrir ou fermer une ouverture côté chambre de commande dudit passage de gaz (31a ; 31b ; 32b).

36. Radiateur visqueux du type à capacité variable selon la revendication 35, où ladite chambre de commande est munie d'un ressort spiral bimétallique (18) qui y est disposé, et ladite soupape rotative (32) est mise en rotation par un déplacement du ressort spiral bimétallique (18) qui dépend de la variation de température dudit liquide visqueux retenu dans ladite chambre de commande.

37. Radiateur visqueux du type à capacité variable selon la revendication 18, 19, 25, 26, 31 ou 35, où ladite soupape rotative (19 ; 22 ; 32 ; 61) se présente sous forme de platine.

38. Radiateur visqueux du type à capacité variable selon la revendication 37,
où ladite soupape rotative (19 ; 22 ; 32 ; 61) est pressée par des moyens de pression dans une direction de façon à fermer au moins une desdites ouvertures côté chambre de commande dudit passage collecteur, dudit passage d'alimentation et dudit passage de gaz.

39. Radiateur visqueux du type à capacité variable selon l'une quelconque des revendications 1 à 38, où ledit rotor (16 ; 83 ; 113) se présente sous forme de platine plate.

40. Radiateur visqueux du type à capacité variable selon l'une quelconque des revendications 1 à 39, où ledit rotor (16 ; 83 ; 113) est muni d'un orifice central (16a ; 83a ; 113a) qui est percé de façon débouchante dans une région centrale dudit rotor (16 ; 83 ; 113).
